# EUROPEAN PATENT APPLICATION

(11) **EP 4 529 029 A1**
(43) Date of publication of application: **26.03.2025**
(21) Application number: 24202532.8
(22) Date of filing: 25.09.2024
(51) Int. Cl.: H04B 7/024, H04B 7/06

(54) **MULTI-ACCESS POINT COORDINATED BEAMFORMING**

(30) Priority: 25.09.2023 US 202363540133 P
(71) Applicant: Comcast Cable Communications LLC, Philadelphia, Pennsylvania 19103 (US)
(72) Inventor: LANANTE, Leonardo Alisasis, Philadelphia, 19103 (US); KIM, Jeongki, Philadelphia, 19103 (US); DINAN, Esmael Hejazi, Philadelphia, 19103 (US); ZHANG, Jiayi, Philadelphia, 19103 (US)
(74) Representative: V.O.

(57) **Abstract**

Multiple access points may communicate with multiple wireless devices, such as stations. Information of channel states, such as coherence times of channels between access points and base stations, may be different. Coherence times of channels may be shared among access points for scheduling a coordinated beamforming transmission. Based on the coherence times of channels, a start time of a coordinated beamforming transmission between access points and base stations may be determined. The coordinated beamforming transmission may be communicated among access points and base stations.

## Description

### CROSS REFERENCE RELATED TO OTHER APPLICATIONS

This application claims the benefit of U.S. Provisional Application No. 63/540,133, filed on September 25, 2023. The above referenced application is hereby incorporated by reference in its entirety.

### BACKGROUND

Multiple access points communicate with multiple wireless devices, such as stations. An access point uses knowledge of a channel state of a target station to compute a steering matrix for sending signals to the target station.

### SUMMARY

The following summary presents a simplified summary of certain features. The summary is not an extensive overview and is not intended to identify key or critical elements.

Multiple access points may communicate with multiple wireless devices, such as stations. In multi-user beamforming, an access point may use knowledge of channel states for computing steering matrices for signals to be sent to one or more stations. Channel states between access points and stations may have different times for changing, such as different coherence times. Such information about one or more stations may be shared between access points. Based on this shared information, such as coherence time(s) of channels between one or more stations and one or more access points, a start time of a coordinated beamforming transmission between access points may be determined and communicated between access points. An indication of a time offset, such as a time difference/delay between a measurement of the coordinated beamforming transmission and a sounding procedure that may precede the coordinated beamforming transmission, may be communicated from an access point to another access point. Based on the time offset, a station associated with an access point may communicate information, such as a coherence time, based on whether a coherence time of a channel is greater than the time offset.

These and other features and advantages are described in greater detail below.

### BRIEF DESCRIPTION OF THE DRAWINGS

Examples of several of the various embodiments of the present disclosure are described herein with reference to the drawings.
FIG. 1 shows example wireless communication networks.
FIG. 2 shows example devices in a communication network.
FIG. 3 shows an example of a multi-AP network.
FIG. 4 shows an example of Enhanced Distributed Channel Access (EDCA) and Coordinated Orthogonal Frequency Division Multiple Access (COFDMA).
FIG. 5 shows an example network that comprises a coordinated AP set.
FIG. 6 shows an example multi-AP operation procedure.
FIG. 7 shows an example multi-AP sounding phase.
FIG. 8 shows an example multi-AP downlink data transmission phase.
FIG. 9 shows an example multi-AP uplink data transmission phase.
FIG. 10 shows an example multi-user (MU) beamforming procedure.
FIG. 11 shows an example coordinated beamforming procedure.
FIG. 12 shows a potential problem that may arise in the example coordinated beamforming procedure of FIG. 11.
FIG. 13 shows an example coordinated beamforming procedure.
FIG. 14 shows an example coordinated beamforming procedure.
FIG. 15 shows an example for coordinating beamforming.
FIG. 16 shows an example for coordinating beamforming.
FIG. 17 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

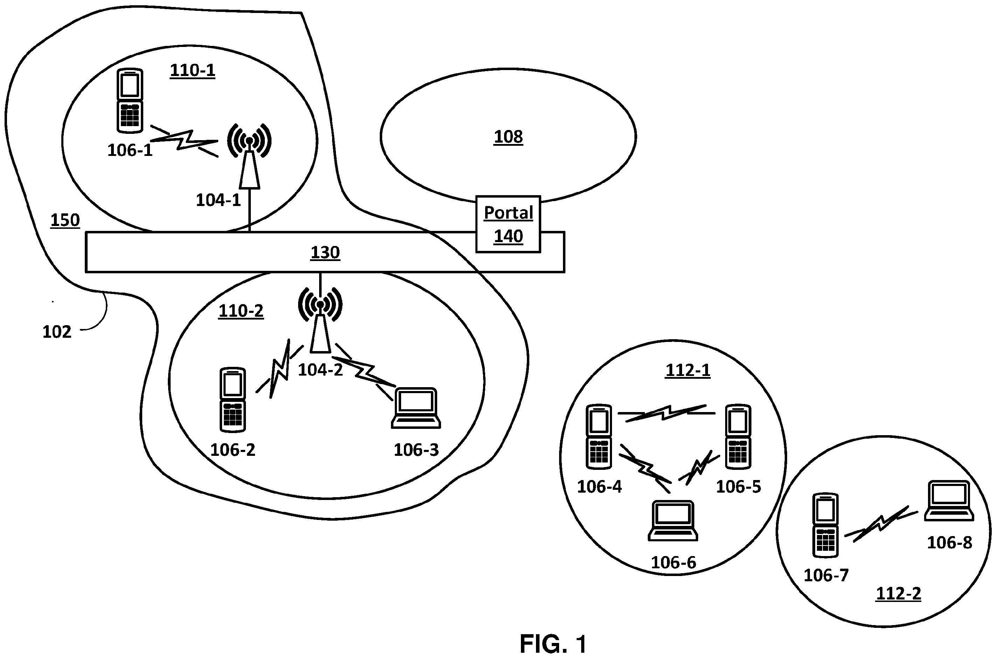

FIG. 1 shows example wireless communication networks. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP STA) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where STAs 106-4, 106-5 and 106-6 may be configured to form a first IBSS 112-1 and STAs 106-7 and 106-8 may be configured to form a second IBSS 112-2. An ad-hoc network and/or IBSS is a network that includes a plurality of STAs without a centralized communication device, such as an AP. The plurality of STAs may be configured to communicate without requiring the presence of an AP. For example, the plurality of STAs in the IBSS may communicate with each other using peer-to-peer communication (e.g., not via an AP). IBSSs do not include a centralized management entity (e.g., an AP) configured to perform a centralized management. STAs within an IBSS are managed in a distributed manner. STAs forming an IBSS may be fixed and/or mobile. The STAs (e.g., STAs 106-4, 106-5, 106-6, 106-7, 106-8) may or may not be permitted to access the DS 130 to constitute a self-contained network.

A computing device (e.g., wireless device and/or STA) may comprise one or more layers in accordance with the open systems interconnection (OSI) model. For example, STAs may comprise a medium access control (MAC) layer that may be in accordance with a defined standard (e.g., an IEEE 802.11 standard, or any other standard). A physical (PHY) layer interface for a radio medium may include the APs and the non-AP stations (STAs). The STA may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a STA. STAs may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.1 1ax, 802. 11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

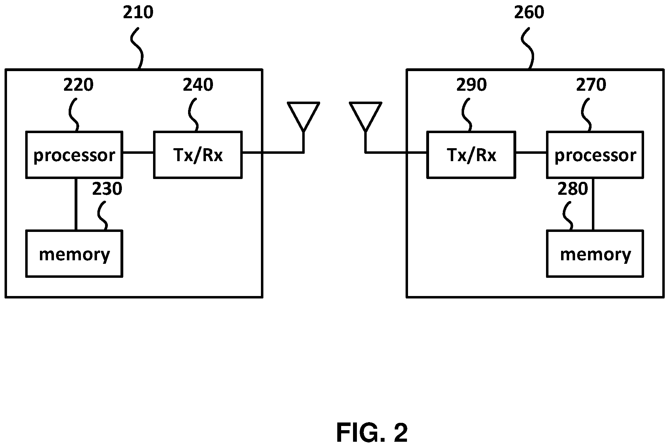

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP STA) and the communication device 260 may operate as a STA (e.g., a non-AP STA). The communication device 210 may operate as a STA (e.g., a non-AP STA) and the communication device 260 may operate as an AP (e.g., an AP STA). Also, or alternatively, the communication device 210 and the communication device 260 may both operate as STAs (e.g., a non-AP STAs) or may both operate as APs (e.g., AP STAs).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3rd generation partnership project (3GPP) protocol, etc.). The processors (e.g., processors 220, 270) may operate as a PHY layer and/or MAC layer. The processors may be operatively connected to the memory 230/280 and/or to the transceiver 240/290, respectively. The communication devices 210 and/or 260 may be a multi-link device (MLD), that is a device capable of operating over multiple links (e.g., as defined by the IEEE 802.11 standard). A MLD implements multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

Processor 220/270 may include one or more processors and/or one or more controllers. The one or more processors and/or one or more controllers may comprise, for example, a general-purpose processor, a digital signal processor (DSP), a microcontroller, an application specific integrated circuit (ASIC), a field programmable gate array (FPGA), a logic circuit, or a chipset.

The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the STA as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the STA as described herein.

Memory 230/280 may include a read-only memory (ROM), a random-access memory (RAM), a flash memory, a memory card, a storage medium, and/or other storage unit. Memory 230/280 may comprise one or more non-transitory computer readable mediums. Memory 230/280 may store computer program instructions or code that may be executed by processor 220/270 to carry out one or more of the operations/ discussed in the present application.

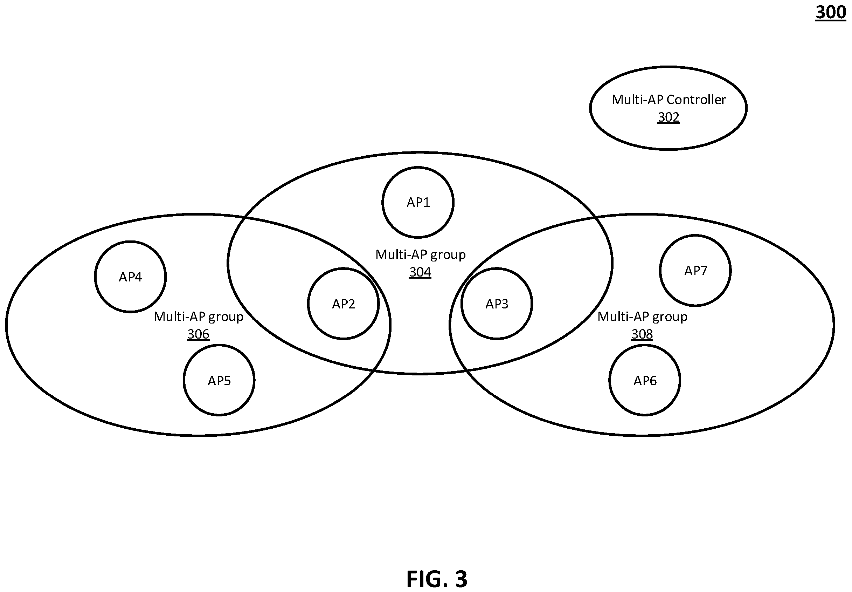

FIG. 3 shows an example multi-AP network 300. Example multi-AP network 300 may be a multi-AP network in accordance with one or more standards, such as a Wi-Fi Alliance standard specification for multi-AP networks and/or any other standard relating to communication with multiple access points. As shown in FIG. 3, multi-AP network 300 may comprise a multi-AP controller 302 and a plurality of multi-AP groups (or multi-AP sets) 304, 306, and 308.

The multi-AP controller 302 may be a logical entity that implements logic for controlling the APs in multi-AP network 300. Multi-AP controller 302 may receive capability information and measurements from the APs and may trigger AP control commands and operations on the APs. Multi-AP controller 302 may also provide onboarding functionality to onboard and provision APs onto multi-AP network 300.

Multi-AP groups 304, 306, and 308 may each comprise a plurality of APs. APs in a multi-AP group may be in communication range of each other and may coordinate their transmissions and/or transmissions from their associated STAs. Coordinated transmissions may involve all or a subset of the APs in a multi-AP group. A multi-AP group may be referred to as an AP candidate set (e.g., APs in a multi-AP group may be considered candidates for a coordinated transmission initiated by an AP). The APs in a multi-AP group may not be required to have the same primary channel. As used herein, the primary channel for an AP may refer to a default channel that the AP monitors for management frames and/or uses to transmit beacon frames. For a STA associated with an AP, the primary channel may refer to the primary channel of the AP, which may be advertised through the AP's beacon frames.

A multi-AP group may be established by a coordinator AP in a multi-AP setup phase prior to any multi-AP coordination. APs of the multi-AP group, other than the coordinator AP, may be referred to as the coordinated APs. A coordinator AP may establish one or more multi-AP groups. A coordinated AP may likewise be a member of multiple multi-AP groups. A coordinator AP of a multi-AP group may be a coordinated AP of another multi-AP group, and vice versa. A multi-AP group may be established by a network administrator manually by configuring APs as part of the multi-AP group. A multi-AP group may be established in a distributed manner by APs without a central controller. An AP may advertise its multi-AP capability in a beacon or other management frame (e.g., public action frame), in this case. Other APs that receive the frame with the multi-AP capability information may perform a multi-AP setup with the AP that advertised the multi-AP capability.

One of the APs in a multi-AP group may be designated as a master AP. The designation of the master AP may be done by an AP controller 302 or by the APs of the multi-AP group. The master AP of a multi-AP group may be fixed or may change over time between the APs of the multi-AP group. An AP that is not the master AP of the multi-AP group is known as a slave AP.

APs in a multi-AP group may perform coordinated transmissions together. An aspect of coordination may comprise coordinated transmissions within the multi-AP group. As used herein, a coordinated transmission, also referred to as a multi-AP transmission, may comprise a transmission event in which multiple APs (of a multi-AP group or a multi-AP network) send (e.g., transmit) in a coordinated manner over a time period. Coordinated transmissions may involve simultaneous transmissions of a plurality of APs in a multi-AP group. The time period of simultaneous AP transmission may be a continuous period. The multi-AP transmission may use different transmission techniques, such as Coordinated OFDMA (COFDMA), Coordinated Spatial Reuse (CSR), Joint Transmission or Reception (JT/JR), Coordinated Beamforming (CBF), and CTDMA, or a combination of two or more of the aforementioned or other techniques.

Multi-AP transmissions may be enabled by the AP controller and/or by the master AP of the multi-AP group. The AP controller and/or the master AP may control time and/or frequency sharing in a transmission opportunity (TXOP). If one of the APs (e.g., the master AP) in the multi-AP group obtains a TXOP, for example, the AP controller and/or the master AP may control how time/frequency resources of the TXOP are to be shared with other APs of the multi-AP group. The AP of the multi-AP group that obtains a TXOP becomes the master AP of the multi-AP group. The master AP may then share a portion of its obtained TXOP (which may be the entire TXOP) with one or more other APs of the multi-AP group.

Different multi-AP transmission schemes may be suitable for different use cases in terms of privacy protection, including whether transmitted data may be shared with other BSSs in the multi-AP group. Some multi-AP transmission schemes, such as CSR, CDTMA, coordinated frequency division multiple access (CFDMA), COFDMA, and CBF, enable a master AP to coordinate slave APs by sharing control information among APs, without requiring the sharing of user data among APs. The control information may comprise BSS information of APs, link quality information of channels between each AP and its associated STAs, and information related to resources to be used to achieve multiplexing in power, time, frequency, or special domains for multi-AP transmission. The control information exchanged among a master AP and slave APs may be used for interference avoidance or nulling to avoid or null co-channel interference introduced to neighboring BSSs in a multi-AP network. Interference avoidance or interference nulling requires that data transmissions between an AP and STAs are only within the same BSS. In other words, each AP transmits or receives data frames to or from its associated STAs, while each STA receives or transmits data frames to or from its associating AP.

By contrast, other multi-AP transmission schemes may enable a master AP to coordinate slave APs by sharing both control information and user data among APs in a multi-AP group. Control information may comprise BSS information related to APs and link quality information of channels between each AP and its associated STAs. By having user data exchanged over backhaul, the master AP and slave APs may perform data transmissions jointly to achieve spatial diversity (e.g., using distributed MIMO, for example, joint transmission (JT) for downlink transmissions and joint reception (JR) for uplink transmissions). The data transmissions between APs and STAs may comprise transmissions within the same BSS and/or across different BSSs. In other words, an AP may send (e.g., transmit) and/or receive data frames to and/or from its associated STAs as well STAs associated with other APs participating in multi-AP transmission. Similarly, a STA may send (e.g., transmit) and/or receive data frames to and/or from multiple APs.

Different multi-AP transmission schemes may be suitable for different use cases in terms of signal reception levels at STAs or APs within a multi-AP group. CBF and JT/JR, for example, require that each STA involved in a multi-AP transmission be located within a common area of signal coverage of the APs involved in the multi-AP transmission. Generally, CBF may be suitable when a receiving STA suffers from potential interference from other APs in the multi-AP group. By using channel related information such as channel state information (CSI), channel quality indication (CQI), or compressed beamforming (BF) feedback exchanged among APs, an AP may pre-code a signal to be sent (e.g., transmitted) to form a beam that increases power toward a target STA while reducing the power that interferes with a STA associated with a neighboring AP. Use cases of JT/JR may require a sufficient received signal power at receiving STAs for JT and a sufficient received signal power at receiving APs for JR. By contrast, CSR may perform multi-AP transmission in an interference coordination manner. The received signal power at a STA associated with an AP sending (e.g., transmitting) data may be required to be much higher than the received interference power.

Different multi-AP transmission schemes may require different synchronization levels and may operate with or without a backhaul between a master AP and slave APs in a multi-AP group. CSR may require PPDU-level synchronization, whereas CBF may require symbol-level synchronization. On the other hand, JT/JR may require tight time/frequency/phase-level synchronization as well as a backhaul for data sharing between APs in the multi-AP group.

Different multi-AP transmission schemes may have different complexity levels with regard to coordination between a master AP and slave APs in a multi-AP group. JT/JR may require very high complexity due to both CSI and user data being shared between APs. CBF may require medium complexity due to the sharing of CSI. CFDMA, COFDMA and CTDMA may require medium or relatively low complexity due to the CSI and time/frequency resources to be shared between APs. CSR may require low complexity as the amount of information related to spatial reuse and traffic that needs to be exchanged between APs may be low.

A multi-AP group may adopt a static multi-AP operation including a static multi-AP transmission scheme. A multi-AP network may also be dynamic due to various reasons. A STA may join or leave the multi-AP network, a STA may switch to a power save mode, or an AP or a STA may change its location. Such changes may lead to changes in the conditions underlying the selection of the multi-AP transmission scheme and may cause certain requirements (e.g., synchronization, backhaul, coordination, etc.) for the multi-AP transmission scheme to be lost. This may result in an inferior quality of transmissions in the multi-AP network.

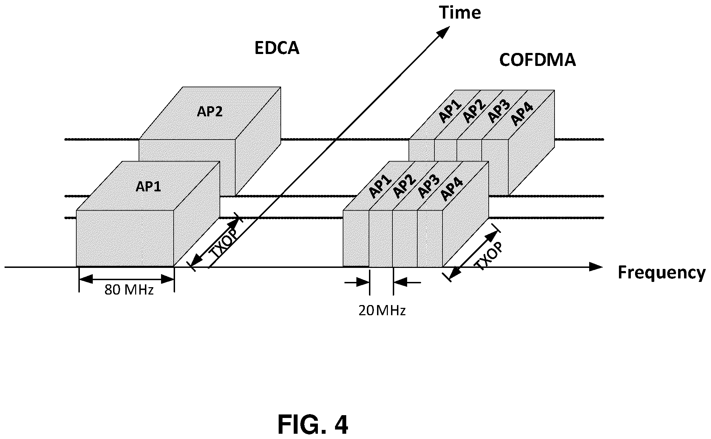

A master AP may share a portion of its TXOP with multiple APs by assigning each of the multiple APs a respective frequency resource (e.g., channel/subchannel) of available frequency resources, for example, such in COFDMA. COFDMA is shown in FIG. 4 as a multi-AP channel access, compared with Enhanced Distributed Channel Access (EDCA). As shown in FIG. 4, in EDCA, channel access by multiple APs (e.g., API, AP2) may occur in consecutive time periods (e.g., TXOPs). During a given channel access, the channel (e.g., 80 MHz) in its entirety may be used by a single AP. In contrast, in COFDMA, access by multiple APs (multi-AP channel access) may take place in a same time period (e.g., same TXOP or same portion of a TXOP) over orthogonal frequency resources. As shown in FIG. 4, an 80 MHz channel may be divided into four non-overlapping 20 MHz channels, each assigned to a respective AP of the multiple APs. The multiple APs may send (e.g., transmit) in a coordinated manner, simultaneously in the same time period, to achieve a multi-AP transmission. In the multi-AP transmission, each of the multiple APs may send (e.g., transmit) a PPDU to one or more STAs.

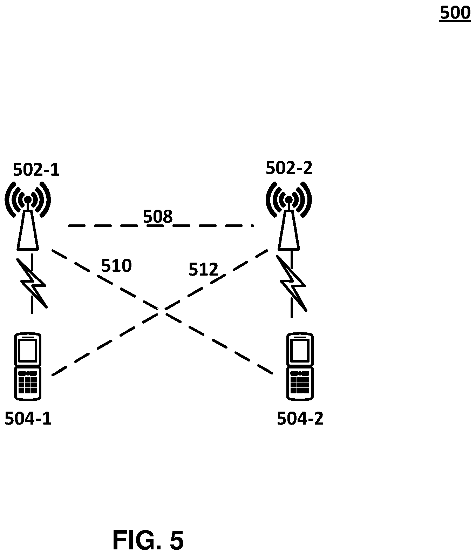

FIG. 5 shows an example network 500 that comprises a coordinated AP set. As shown in FIG. 5, the coordinated AP set may be comprised of two APs - AP 502-1 and AP 502-2. The coordinated AP set may be a subset of an established multi-AP group. At least one STA may be associated with each of APs 502-1 and 502-2. A STA 504-1 may be associated with AP 502-1, and a STA 504-2 may be associated with AP 502-2.

As described herein in FIG. 1, APs 502-1 and 502-2 may belong to the same ESS. In such a case, APs 502-1 and 502-2 may be connected by a DS to support ESS features. In addition, as part of a coordinated AP set, APs 502-1 and 502-2 may be connected by a backhaul. The backhaul is used to share information quickly between APs to support coordinated transmissions. The shared information may be channel state information or data to be sent (e.g., transmitted) to associated STAs. The backhaul may be a wired backhaul or a wireless backhaul. A wired backhaul is preferred for high-capacity information transfer without burdening the main radios of the APs. However, a wired backhaul may require a higher deployment cost and may place greater constraints on AP placement. A wireless backhaul is preferred for its lower deployment cost and flexibility regarding AP placement. However, because a wireless backhaul relies on the main radios of the APs to transfer information, the APs cannot transmit or receive any data while the wireless backhaul is being used.

Typically, one of APs 502-1 and 502-2 may act as a Master AP and the other as a Slave AP. The Master AP is the AP that is the owner of the TXOP. The Master AP may share frequency resources during the TXOP with the Slave AP. If/when there are more than two APs in the coordinated set, a Master AP may share its TXOP with only a subset of the coordinated AP set. The role of the Master AP may change over time. The Master AP role may be assigned to a specific AP for a duration of time. Similarly, the Slave AP role may be chosen by the Master AP dynamically or can be pre-assigned for a duration of time.

The APs may only do certain types of coordinated transmissions, for example, depending on the capability of APs in a coordinated AP set. In FIG. 5, if AP 502-1 supports JT and CSR while AP 502-2 supports CSR and CBF, for example, both APs may only perform CSR as a coordinated transmission scheme. An AP may also prefer to perform single AP transmissions for a duration of time if the benefit of coordinated transmission does not outweigh some disadvantages with coordinated transmission such as reduced flexibility and increased computational power required.

CSR is one type of multi-AP coordination that may be supported by AP 502-1 and AP 502-2 as shown in FIG. 5. Spatial reuse using CSR can be more stable than non-AP coordinated spatial reuse schemes such as OBSS PD-based SR and PSR-based SR. In example 500, APs 502-1 and 502-2 may perform a joint sounding operation in order to measure path loss (PL) on paths of network 500. The joint sounding operation may result in the measurement of PL 508 for the path between APs 502-1 and 502-2, path loss 510 for the path between AP 502-1 and STA 504-2, and path loss 512 for the path between AP 502-2 and STA 504-1. The measured path loss information may then be shared between APs 502-1 and 502-2 (e.g., using the backhaul) to allow for simultaneous transmissions by APs 502-1 and 502-2 to their associated STAs 504-1 and 504-2 respectively. Specifically, if/when APs 502-1 and/or 502-2 obtains a TXOP to become the Master AP. The Master AP may then send a CSR announcement frame to the other AP(s). The Master AP may perform a polling operation, before sending the CSR announcement frame, to poll Slave APs regarding packet availability for transmission. If at least one Slave AP responds indicating packet availability, the Master AP may proceed with sending the CSR announcement frame. In the CSR announcement, the Master AP may limit the transmit power of a Slave AP in order to protect its own transmission to its target STA. The Slave AP may similarly protect its own transmission to its target STA by choosing a modulation scheme that enables a high enough Signal to Interference Ratio (SIR) margin to support the interference due to the transmission of the Master AP to its target STA.

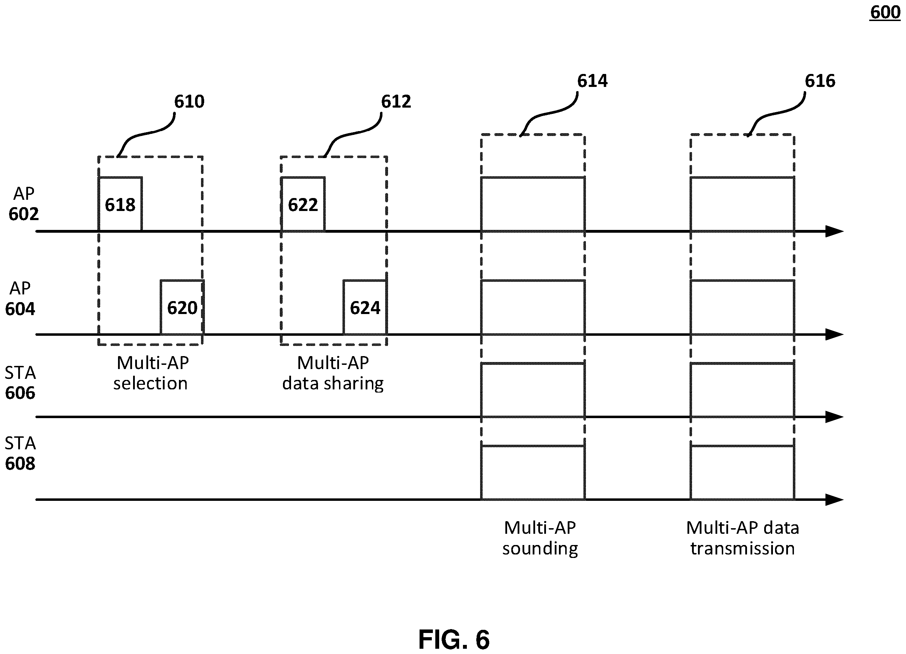

FIG. 6 shows an example 600 of a multi-AP operation procedure. In example 600, the multi-AP operation procedure is shown with respect to a multi-AP network that comprises APs 602 and 604 and STAs 606 and 608. APs 602 and 604 may form a multi-AP group. AP 602 may be the master AP and AP 604 may be a slave AP of the multi-AP group. AP 602 may obtain a TXOP making it the master AP of the multi-AP group. Alternatively, AP 602 may be designated as the master AP by a multi-AP controller.

As shown in FIG. 6, the multi-AP operation procedure may comprise a series of phases in time, each of which may contain a plurality of frame exchanges within the multi-AP network. Specifically, the multi-AP operation procedure may be comprised of a multi-AP selection phase 610, a multi-AP data sharing phase 612, a multi-AP sounding phase 614, and/or a multi-AP data transmission phase 616.

A multi-AP network may carry out a multi-AP operation based on a specific multi-AP transmission scheme. The multi-AP transmission scheme may be chosen by the master AP based on the capabilities of the slave APs in a multi-AP group. Prior to a multi-AP operation, a slave AP may inform the master AP of capability information related to the slave AP, including the capabilities of supporting one or more multi-AP transmission schemes. The slave AP may also inform the master AP of BSS information of the BSS of the slave AP and of link quality information for STAs associated with the slave AP. The master AP may receive information related to all available slave APs. The information related to slave APs may comprise capability information, BSS information, and link quality information. The master AP may determine during a multi-AP selection phase the slave APs to be designated for a multi-AP transmission and a specific multi-AP transmission scheme to be used during the multi-AP transmission, based on the information provided by available slave APs.

The multi-AP selection phase 610 may be comprised of procedures for soliciting, selecting, and/or designating slave AP(s) for a multi-AP group by a master AP. As seen in FIG. 6, the multi-AP selection phase may comprise transmissions of frame 618 from AP 602 and frame 620 from AP 604. AP 602 may send (e.g., transmit) frame 618 to solicit information regarding the buffer status of AP 604. AP 604 may send (e.g., transmit) frame 620 to inform AP 602 of its and its associated STAs buffer status and/or whether it intends to join multi-AP operation. Multi-AP selection phase 610 may also be used to exchange information related to multi-AP operation, including BSS information of APs and link quality information between each AP and its associated STAs, for example. The BSS information of an AP may be comprised of a BSS ID of the BSS of the AP, identifiers and/or capabilities of STAs belonging to the BSS, information regarding sounding capabilities of the STAs, information regarding MIMO capabilities of the AP, etc. Link quality information may comprise received signal strength indicator (RSSI), signal-to-noise ratio (SNR), signal-to-interference-plus-noise-ratio (SINR), channel state information (CSI), channel quality indicator (CQI).

The multi-AP data sharing phase 612 may be comprised of procedures for sharing data frames to be transmitted by APs to associated STAs among the master AP and selected slave AP(s) via direct connections between APs. Phase 612 may be optional for some multi-AP data transmission schemes. Phase 612 may be required for JT/JR as data frames may be exchanged between APs before or after multi-AP data transmission phase 616.

The multi-AP data sharing phase 612 may be performed using a wired backhaul, an in-channel wireless backhaul, or an off-channel wireless backhaul. In some cases, multi-AP data sharing phase 612 may be performed over an in-channel backhaul (e.g., using the same wireless channel used to send/receive data to/from STAs). As shown in FIG. 6, in phase 612, AP 602 may send (e.g., transmit) a frame 622, which may be received by AP 604. Frame 622 may comprise MPDUs that AP 602 wishes to send (e.g., transmit) to associated STAs using a multi-AP operation. Similarly, AP 604 may send (e.g., transmit) a frame 624, which may be received by AP 602. Frame 624 may comprise MPDUs that AP 604 wishes to send (e.g., transmit) to associated STAs using a multi-AP operation.

The multi-AP sounding phase 614 may be comprised of procedures for multi-AP channel sounding, including channel estimation and feedback of channel estimates among the master AP, candidate slave AP(s), and associated STAs. Phase 614 may be optional for some multi-AP transmission schemes, such as COFDMA, CDTMA, and CSR. Phase 614 may be performed by the master AP to aid in resource unit allocation when orchestrating a COFDMA transmission.

The multi-AP data transmission phase 616 may comprise exchange of data frames between the master AP, slave AP(s), and their associated STAs based on multi-AP transmission scheme(s) determined by the master AP. Depending on the multi-AP transmission scheme(s) to be used, phase 616 may be comprised of optional synchronization between APs of the multi-AP group, before exchange of data frames between APs and STAs within the multi-AP group.

The order of phases 610, 612, 614 and 616 may be different than shown in FIG. 6. In COFDMA, phase 616 may occur immediately after phase 610, whereas, in JT/JR, phase 612 may occur after phase 610. Further, as mentioned herein, some phases may be optional and may or may not be present. Phase 614 may not be required for COFDMA but may be required for JT/JR.

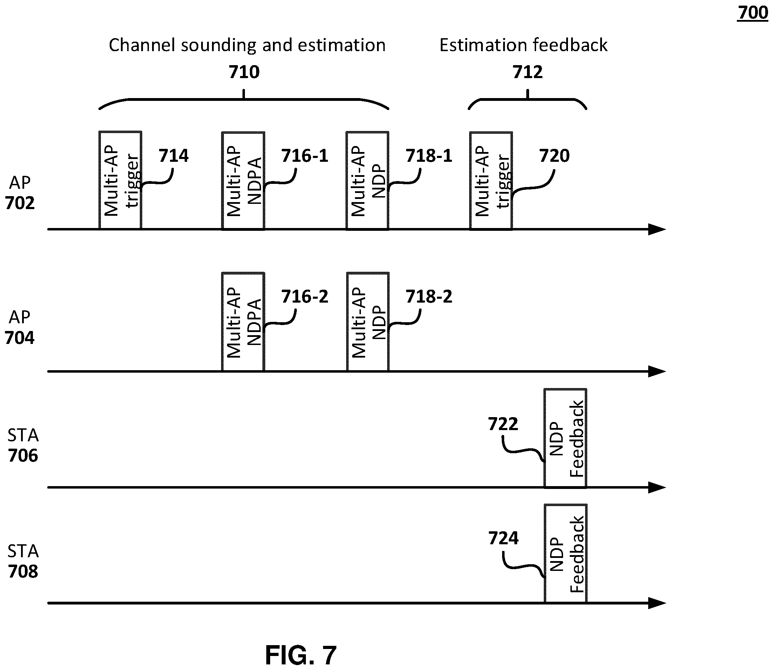

FIG. 7 shows an example 700 of a multi-AP sounding phase. Multi-AP sounding phase 700 may be an example of multi-AP sounding phase 614. As shown in FIG. 7, example 700 may comprise a master AP 702 and a slave AP 704 of a multi-AP group. Example 700 may further include a STA 706 associated with AP 702 and a STA 708 associated with AP 704.

As shown in FIG. 7, multi-AP sounding phase 700 may comprise frame exchanges to allow AP 702 (the master AP) to acquire channel state information (CSI) of channels in the multi-AP group. Phase 700 may be comprised of a first subphase 710 and a second subphase 712.

During the first subphase 710, APs may initiate channel sounding and STAs may estimate channel state information (CSI). AP 702 may transmit a frame 714 to AP 704 (the slave AP) to trigger multi-AP sounding. Frame 714 may comprise a multi-AP trigger frame. Subsequently, APs 702 and 704 may send (e.g., transmit) respectively announcement frames 716-1 and 716-2 to their respective associated STAs 706 and 708 to announce the transmission of sounding frames. Frames 716-1 and 716-2 may comprise multi-AP null data packet announcement (NDPA) frames. Frames 716-1 and 716-2 may be sent (e.g., transmitted) simultaneously. Next, APs 702 and 704 may send (e.g., transmit) respectively frames 718-1 and 718-2 to STAs 706 and 708 respectively. Frames 718-1 and 718-2 may comprise multi-AP null data packet (NDP) frames. STAs 706 and 708 receive frames 718-1 and 718-2 respectively and perform channel estimation of the channels from AP 702 to STA 706 and from AP 704 to STA 708, respectively.

During the second subphase 712, APs may initiate a procedure for STAs to feed back channel estimates to the APs. AP 702 may send (e.g., transmit) a frame 720 to trigger STAs 706 and 708 to send (e.g., transmit) their channel estimates to APs 702 and 704 respectively. Frame 720 may comprise a multi-AP trigger frame. STAs 706 and 708 may send (e.g., transmit) respectively frames 722 and 724 including feedback of channel estimates to APs 702 and 704 respectively. Frames 722 and 724 may comprise NDP feedback frames. The feedback of channel estimates may comprise NDP feedback, CSI-related information, a beamforming report (BFR), or a channel quality indication (CQI) report.

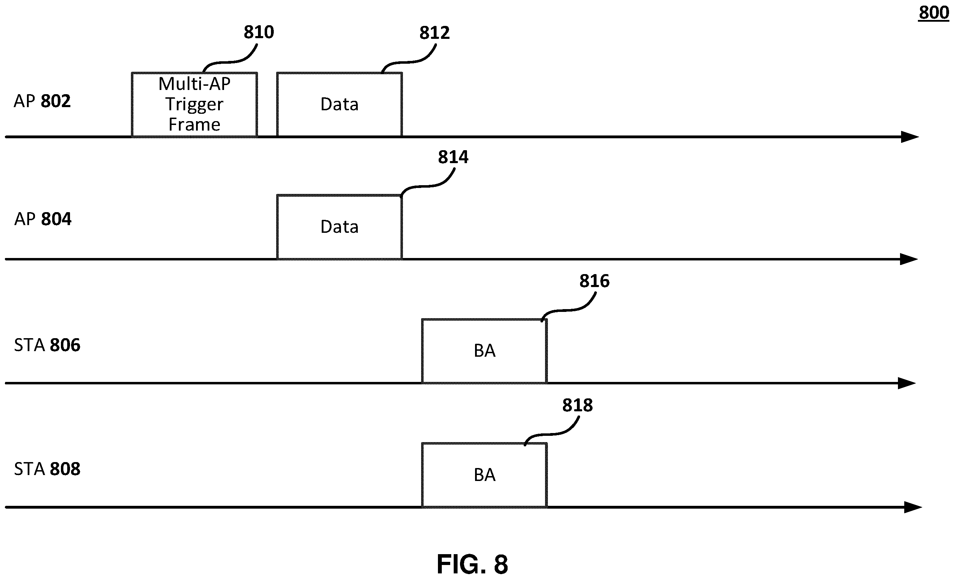

FIG. 8 shows an example 800 of a multi-AP downlink data transmission phase. Multi-AP downlink data transmission phase 800 may be an example of multi-AP data transmission phase 616. As shown in FIG. 8, example 800 may comprise a master AP 802 and a slave AP 804 of a multi-AP group. Example 800 may further comprise a STA 806 associated with AP 802, and a STA 808 associated with AP 804.

As shown in FIG. 8, multi-AP downlink data transmission phase 800 may comprise frame exchanges to enable master AP 802 to coordinate with slave AP 804 to perform specific multi-AP transmission schemes with their associated STAs 806 and 808 respectively. The multi-AP transmission schemes may comprise COFDMA, CTDMA, CSR, CBF, JT/JR, or a combination of two or more of the aforementioned schemes.

As shown in FIG. 8, a master AP 802 may begin phase 800 by sending (e.g., transmitting) a frame 810 to AP 804. Frame 810 may be comprised of information related to AP 804 (e.g., an identifier of AP 804), synchronization information, information related to a specific multi-AP transmission scheme to be used, and/or information related to a resource unit (RU) for use by AP 804 to acknowledge frame 810. Frame 810 may comprise a control frame. Frame 810 may comprise a multi-AP trigger frame.

A slave AP 804 may receive frame 810 and may use the synchronization information to synchronize with master AP 802. APs 802 and 804 may perform data transmission to their associated STAs 806 and 808 respectively. Specifically, AP 802 may send (e.g., transmit) a data frame 812 to its associated STA 806, and AP 804 may send (e.g., transmit) a data frame 814 to its associated STA 808. Depending on the multi-AP transmission scheme being used, APs 802 and 804 may send (e.g., transmit) frames 812 and 814 respectively to STAs in different BSSs. If the multi-AP transmission scheme is JT/JR, AP 802 may also send (e.g., transmit) frame 812 to STA 808 associated with slave AP 804, and AP 804 may also send (e.g., transmit) frame 814 to STA 808 associated with AP 804. The resources for sending (e.g., transmitting) and receiving frames 812 and 814 may depend on the specific multi-AP transmission scheme adopted.

A STA 806 and a STA 808 may acknowledge frames 812 and 814 respectively. STA 806 may send (e.g., transmit) a frame 816 to AP 802, and STA 808 may send (e.g., transmit) a frame 818 to AP 804. Frames 816 and 818 may comprise block ack (BA) frames. STAs 806 and 808 may also send (e.g., transmit) frames 816 and 818 to APs in different BSSs, if/when required by the used multi-AP transmission scheme. If/when the multi-AP transmission scheme is JT/JR, a STA 806 may also send (e.g., transmit) frame 816 to AP 804, and a STA 808 may also send (e.g., transmit) frame 818 to AP 802. The resources for sending (e.g., transmitting) and receiving frames 816 and 818 may depend on the specific multi-AP transmission scheme adopted.

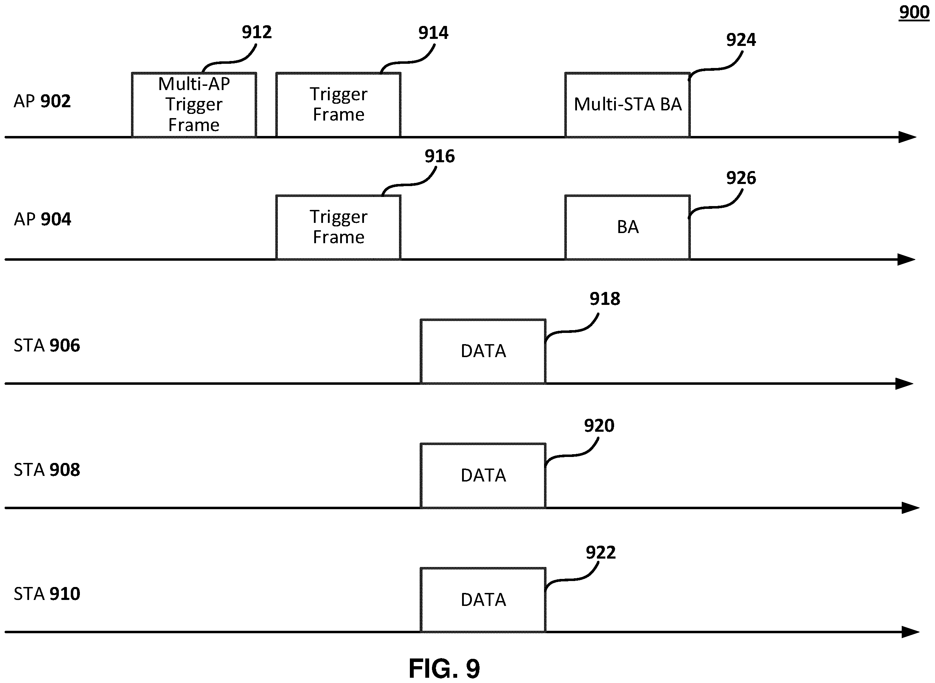

FIG. 9 shows an example 900 of a multi-AP uplink data transmission phase. Multi-AP uplink data transmission phase 900 may be an example of multi-AP data transmission phase 616. As shown in FIG. 9, example 900 may comprise a master AP 902 and a slave AP 904 of a multi-AP group. Example 900 may be further comprised of STAs 906 and 908 associated with AP 902, and a STA 910 associated with AP 904.

As shown in FIG. 9, multi-AP uplink data transmission phase 900 may comprise frame exchanges to enable master AP 902 to coordinate with slave AP 904 to perform specific multi-AP transmission schemes with STAs 906, 908, and 910910. The multi-AP transmission schemes may be comprised of COFDMA, CTDMA, CSR, CBF, JT/JR, or a combination of two or more of the aforementioned schemes.

As shown in FIG. 9, a master AP 902 may begin phase 900 by sending (e.g., transmitting) a frame 912 to an AP 904. Frame 912 may be comprised of information related to AP 904 (e.g., an identifier of AP 904), synchronization information, information related to a specific multi-AP transmission scheme to be used, and/or information related to an RU for use by AP 904 to acknowledge frame 912. Frame 912 may comprise a control frame, for example, frame 912 may comprise a multi-AP trigger frame.

The slave AP 904 may receive frame 912 and may use the synchronization information to synchronize with the master AP 902. Subsequently, APs 902 and 904 may solicit uplink data transmissions from their associated STAs 906, 908 and 910 using trigger frames. Specifically, AP 902 may send (e.g., transmit) a trigger frame 914 to its associated STAs 906 and 908, and AP 904 may send (e.g., transmit) a trigger frame 916 to its associated STA 910. APs 902 and 904 may also transmit frames 914 and 916 respectively to STAs in different BSSs, depending on the multi-AP transmission scheme being used. If/when the multi-AP transmission scheme is JT/JR, AP 902 may also send (e.g., transmit) frame 914 to STA 910 associated with slave AP 904, and AP 904 may also send (e.g., transmit) frame 916 to STAs 906 and 908 associated with AP 902. The resources for sending (e.g., transmitting) and receiving frames 914 and 916 may depend on the specific multi-AP transmission scheme adopted.

The STAs 906 and 908 may respond to frame 914, STA 910 may respond to frame 916. STAs 906 and 908 may send (e.g., transmit) frames 918 and 920 respectively to AP 902, for example, while STA 910 may send (e.g., transmit) a frame 922 to AP 904. Frames 918, 920, and/or 922 may be sent (e.g., transmitted) simultaneously. Frames 918, 920, and 922 may comprise data frames or null data frames. STAs 906, 908, and 910 may also send (e.g., transmit) frames 918, 920, and 922 respectively to APs in different BSSs, if required by the used multi-AP transmission scheme. If/when the multi-AP transmission scheme is JT/JR, STAs 906 and 908 may also send (e.g., transmit) respective frames 918 and 920 to AP 904, and STA 910 may also send (e.g., transmit) frame 922 to AP 902. The resources for sending (e.g., transmitting) and receiving frames 918, 920, and 922 may depend on the specific multi-AP transmission scheme adopted.

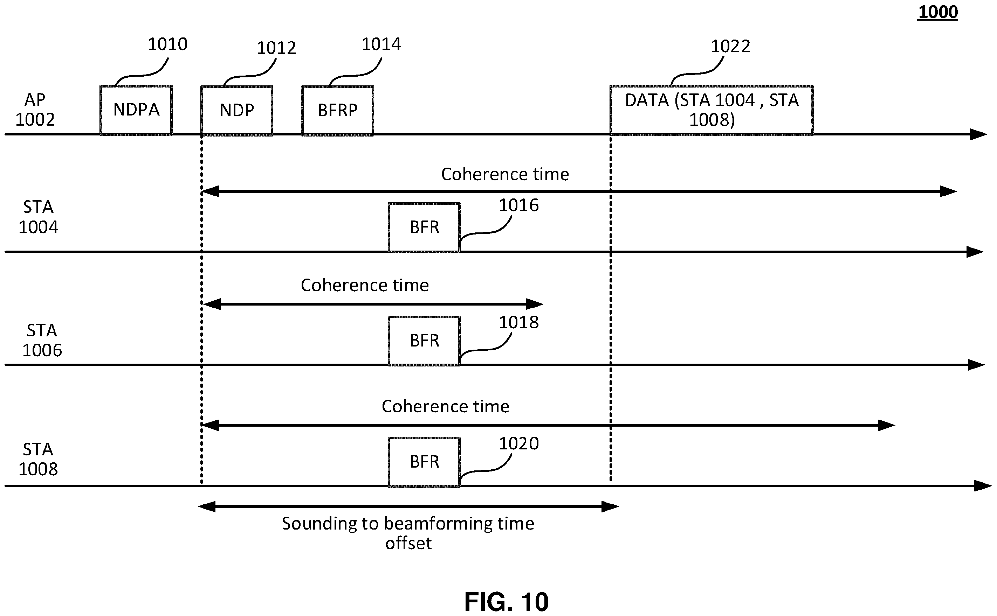

FIG. 10 shows an example 1000 of a multi-user (MU) beamforming procedure. An MU beamforming transmission procedure may allow an AP to transmit a frame to multiple STAs using the same time and frequency resources by using a set of beamforming weights to cancel inter-user interference to each STA. As shown in FIG. 10, the example 1000 may include an AP 1002 and STAs 1004, 1006, and 1008. STAs 1004, 1006, and 1008 may be associated with AP 1002.

In some examples, the MU beamforming procedure may include a sounding phase/procedure, which AP 1002 may use to acquire channel state information from STAs 1004, 1006, and 1008. The sounding phase/procedure may begin with AP 1002 transmitting a null data packet announcement (NDPA) frame 1010 to STAs 1004, 1006, and 1008. The NDPA frame 1010 may announce to STAs 1004, 1006, and 1008 the transmission of one or more sounding frames by AP 1002.

AP 1002 may transmit a null data packet (NDP) frame 1012 to STAs 1004, 1006, and 1008. STAs 1004, 1006, and 1008 may each receive the NDP frame 1012 and use the NDP frame 1012 to estimate the downlink channel from AP 1002. For example, STA 1004 may estimate the downlink channel from AP 1002 to STA 1004; STA 1006 may estimate the downlink channel from AP 1002 to STA 1006; and STA 1008 may estimate the downlink channel from AP 1002 to STA 1008.

AP 1002 may transmit a beamforming report pull (BFRP) frame 1014 to STAs 1004, 1006, and 1008 to retrieve the downlink channel estimates from STAs 1004, 1006, and 1008. STAs 1004, 1006, and 1008 may respond to the BFRP frame 1014 by transmitting respectively beamforming report (BFR) frames 1016, 1018, and 1020 to AP 1002. The BFR frames 1016, 1018, and 1020 may include the downlink channel estimates calculated respectively by STAs 1004, 1006, and 1008.

In some examples, AP 1002 may use the downlink channel estimates calculated by STAs 1004, 1006, and 1008 to perform a MU beamforming transmission 1022 to one or more of STAs 1004, 1006, and 1008. The MU beamforming transmission may include a beamformed transmission to one or more of STAs 1004, 1006, and 1008.

In some examples, AP 1002 may have information relating to the coherence time of each of the downlink channels from AP 1002 to STAs 1004, 1006, and 1008. A person of skill in the art would understand the coherence time of a communication channel represents the time duration over which the impulse response of the communication channel is considered to be not varying. As such, a channel estimate of the communication channel may be considered to accurately represent the communication channel (and may be used to transmit/receive over the communication channel), if the time elapsed from calculation of the channel estimate does not exceed a coherence time of the communication channel.

In some examples, AP 1002 may use the information relating to the coherence time of the downlink channels from AP 1002 to STAs 1004, 1006, and 1008 in determining the destination STAs served by MU beamforming transmission 1022. For example, AP 1002 may include in MU beamforming transmission 1022 a data stream for a STA among STAs 1004, 1006, and 1008 if the coherence time of the downlink channel from AP 1002 to the STA is longer than or equal to a time offset between a measurement of the sounding phase/procedure (sounding measurement) and MU beamforming transmission 1022. The sounding measurement may include the reception by STAs 1004, 1006, and 1008 of a frame (e.g., NDP frame 1012) based on which STAs 1004, 1006, and 1008 calculate the estimates of the downlink channels from AP 1002 (used in MU beamforming transmission 1022). As shown in FIG. 10, the time offset between the sounding measurement and MU beamforming transmission 1022 may be determined as the time difference/delay between a start time of the sounding measurement (start of transmission of NDP frame 1012) and a start time of MU beamforming transmission 1022. In some examples, the time offset between the sounding measurement and MU beamforming transmission 1022 may be determined as the time difference/delay between the start time of the sounding measurement and an end time of MU beamforming transmission 1022; an end time of the sounding measurement (end of transmission of NDP frame 1012) and the start time of MU beamforming transmission 1022; or an end time of the sounding measurement and the end time of MU beamforming transmission 1022. In some examples, the time offset between the sounding measurement and the MU beamforming transmission may be calculated or estimated by AP 1002, and/or the MU beamforming transmission may be based on a default value.

In the example 1000, it is assumed that the coherence time of the downlink channel from AP 1002 to STA 1004 is longer than the time offset between the sounding measurement and MU beamforming transmission 1022; that the coherence time of the downlink channel from AP 1002 to STA 1006 is shorter than the time offset between the sounding measurement and MU beamforming transmission 1022; and that the coherence time of the downlink channel from AP 1002 to STA 1008 is longer than the time offset between the sounding measurement and MU beamforming transmission 1022. As such, AP 1002 may use the downlink channel estimates retrieved from STAs 1004 and 1008, and AP 1002 may not use the downlink channel estimate retrieved from STA 1006, in MU beamforming transmission 1022. As such, MU beamforming transmission 1022 may include a data stream for each of STAs 1004 and 1008, and MU beamforming transmission 1022 may not include a data stream for STA 1006.

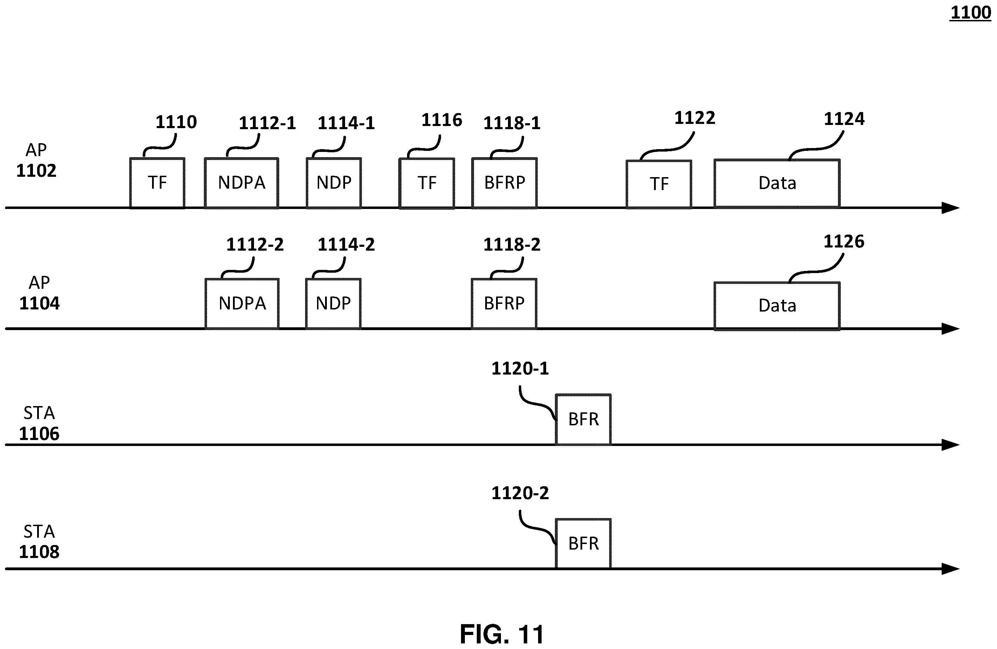

FIG. 11 shows an example 1100 of a coordinated beamforming procedure. A coordinated beamforming procedure may allow two or more APs to transmit to multiple STAs using the same time and frequency resources without interference. As shown in FIG. 11, the example 1100 may include APs 1102 and 1104 and STAs 1106 and 1108. STAs 1106 and 1108 may be associated with APs 1102 and 1104, respectively. APs 1102 and 1104 may form a coordinated AP set. In the example 1100, AP 1102 may be a master AP of the coordinated AP set and AP 1104 may be a slave AP of the coordinated AP set.

In some examples, the coordinated beamforming procedure may include a sounding phase/procedure, within which APs 1102 and 1104 may acquire channel state information from STAs 1106 and 1108, respectively. The sounding phase/procedure may begin with AP 1102 transmitting a trigger frame 1110 to AP 1104. Trigger frame 1110 triggers AP 1104 to perform a sounding procedure concurrently with AP 1102. APs 1102 and 1104 may initiate the sounding procedure by transmitting simultaneously NDPA frames 1112-1 and 1112-2 to STAs 1106 and 1108, respectively. NDPA frame 1112-1 may announce to STA 1106 the transmission of one or more sounding frames by AP 1102. NDPA frame 1112-2 may announce to STA 1108 the transmission of one or more sounding frames by AP 1104. NDPA frames 1112-1 and 1112-2 may be duplicate frames.

APs 1102 and 1104 may transmit simultaneously NDP frames 1114-1 and 1114-2 to STAs 1106 and 1108, respectively. NDP frames 1114-1 and 1114-2 may include Long Training fields (LTFs) corresponding to distinct spatial streams associated to APs 1102 and 1104, respectively. STAs 1106 and 1108 may each receive NDP frames 1114-1 and 1114-2 and use NDP frames 1114-1 and 1114-2 to estimate the downlink channel from AP 1102 and the downlink channel from AP 1104. In some examples, APs 1102 and 1104 may transmit NDP frames 1114-1 and 1114-2 sequentially. STAs 1106 and 1108 may each receive NDP frame 1114-1 and use NDP frame 1114-1 to estimate the downlink channel from AP 1102. Similarly, STAs 1106 and 1108 may each receive NDP frame 1114-2 and use NDP frame 1114-2 to estimate the downlink channel from AP 1104.

AP 1102 may transmit a trigger frame 1116 to AP 1104. Trigger frame 1116 may trigger AP 1104 to perform a channel estimation polling procedure concurrently with AP 1102. APs 1102 and 1104 may initiate the channel estimation polling procedure by transmitting simultaneously BFRP frames 1118-1 and 1118-2 to retrieve the downlink channel estimates from STAs 1106 and 1108. STAs 1106 and 1108 may respond to BFRP frames 1118-1 and 1118-2 respectively by transmitting respectively BFR frames 1120-1 and 1120-2. BFR frame 1120-1, transmitted to AP 1102, may include an estimate of the downlink channel from AP 1102 to STA 1106 and an estimate of the downlink channel from AP 1104 to STA 1106 as well. BFR frame 1120-2, transmitted to AP 1104, may include an estimate of the downlink channel from AP 1104 to STA 1108 and an estimate of the downlink channel from AP 1102 to STA 1108 as well.

In some examples (not shown in FIG. 11), APs 1102 and 1104 may exchange the downlink channel estimates received respectively from STAs 1106 and 1108. As such, AP 1102 may obtain from AP 1104 the estimate of the downlink channel from AP 1102 to STA 1108, and AP 1104 may obtain from AP 1102 the estimate of the downlink channel from AP 1104 to STA 1106. In some examples, the exchange of the downlink channel estimates may include AP 1102 transmitting a trigger frame to AP 1104 soliciting AP 1104 to send to AP 1102 the downlink channel estimates received from STA 1108. AP 1102 may include the downlink channel estimates received from STA 1106 in the trigger frame. Or, AP 1102 may include the downlink channel estimates received from STA 1106 in a separate frame and transmit to AP 1104. In some examples, the exchange of the downlink channel estimates may be performed via a backhaul link.

APs 1102 and 1104 may each compute a respective set of beamforming weights for a coordinated beamforming transmission comprising APs 1102 and 1104 by using the obtained downlink channel estimates. As shown in FIG. 11, the coordinated beamforming transmission may comprise a first beamforming transmission 1124 by AP 1102 and a second beamforming transmission 1126 by AP 1104. The first beamforming transmission 1124 and second beamforming transmission 1126 may overlap in time and frequency. In some examples, AP 1102 may transmit a trigger frame 1122 to trigger first beamforming transmission 1124 and second beamforming transmission 1126. APs 1102 and 1104 may begin the first beamforming transmission 1124 and second beamforming transmission 1126 a short interframe space (SIFS) after transmission of the trigger frame 1122 by AP 1102.

In some examples, AP 1102 may compute a first set of beamforming weights for the first beamforming transmission 1124 based on the estimate of the downlink channel from AP 1102 to STA 1106 and/or on the estimate of the downlink channel from AP 1102 to STA 1108. Similarly, AP 1104 may compute a second set of beamforming weights for the second beamforming transmission 1126 based on the estimate of the downlink channel from AP 1104 to STA 1106 and/or on the estimate of the downlink channel from AP 1104 to STA 1108. In some examples, the first set of beamforming weights may be configured such that the first beamforming transmission 1124 may comprise a first beam carrying a first data stream in the direction of STA 1106 and a null beam in the direction of STA 1108. As such, the first beamforming transmission 1124 may not affect the capability of STA 1108 of receiving a frame from another STA (e.g., AP 1104). Similarly, the second set of beamforming weights may be configured such that the second beamforming transmission 1126 may comprise a second beam carrying a second data stream in the direction of STA 1108 and a null beam in the direction of STA 1106. As such, the beamforming transmission 1126 may not affect the capability of STA 1106 of receiving a frame from another STA (e.g., AP 1102).

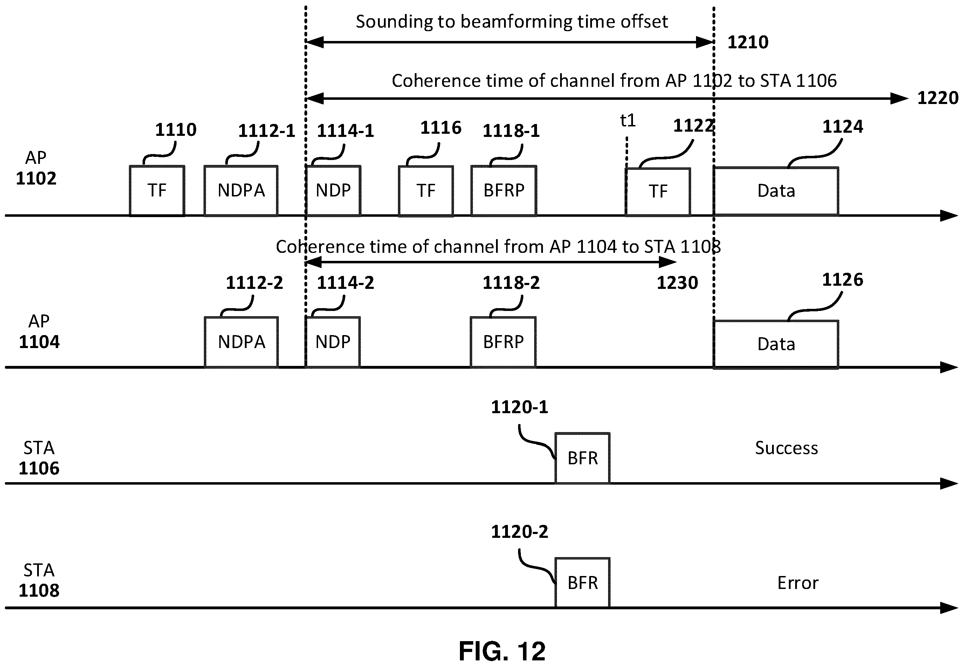

FIG. 12 shows a potential problem that may arise in coordinated beamforming, such as in the coordinated beamforming procedure described with respect to FIG. 11. In FIG. 12, a time offset between a sounding measurement and a coordinated beamforming transmission is shown as 1210. A coherence time of a downlink channel from AP 1102 to STA 1106 is shown as 1220. A coherence time of a downlink channel from AP 1104 to STA 1108 is shown as 1230.

In some examples, the downlink channel from AP 1102 to STA 1106 may have a longer coherence time (e.g., the coherence time 1220) than the downlink channel from AP 1104 to STA 1108 (e.g., the coherence time 1230). For example, the coherence time 1220 of the downlink channel from AP 1102 to STA 1106 may be longer than the time offset 1210 between the sounding measurement and the coordinated beamforming transmission. For example, the coherence time 1230 of the downlink channel from AP 1104 to STA 1108 may be shorter than the time offset 1210 between the sounding measurement and the coordinated beamforming transmission.

In some examples, AP 1102 may trigger the coordinated beamforming transmission based on the coherence time 1220 of the downlink channel from AP 1102 to STA 1106. AP 1102 may trigger the coordinated beamforming transmission without considering the coherence time 1230 of the downlink channel from AP 1104 to STA 1108. For example, as shown in FIG. 12, AP 1102 may transmit trigger frame 1122 at a time t1. AP1102 may guarantee that the time offset 1210 between the sounding measurement and the coordinated beamforming transmission is shorter than the coherence time 1220 of the downlink channel from AP 1102 to STA 1106, at the time t1. The first beamforming weights computed by AP 1102 (e.g., based at least in part on the estimate of the downlink channel from AP 1102 to STA 1106) may be adapted/tailored for the first beamforming transmission 1124 transmitted by AP 1102. For example, the first beamforming weights may be based on an up-to-date estimate of the downlink channel from AP 1102 to STA 1106. Such first beamforming weights may guarantee that the first beamforming transmission 1124 comprises the first beam carrying the first data stream in the direction of STA 1106.

AP 1102 may not guarantee that the time offset 1210 between the sounding measurement and the coordinated beamforming transmission is also shorter than the coherence time 1230 of the downlink channel from AP 1104 to STA 1108. This may result in the second beamforming weights computed by AP 1104 (e.g., based at least in part on the estimate of the downlink channel from AP 1104 to STA 1108) not being adapted/tailored for the second beamforming transmission 1126 transmitted by AP 1104. For example, the second beamforming weights may be based on a stale estimate of the downlink channel from AP 1104 to STA 1108. Such second beamforming weights may not guarantee that second beamforming transmission 1126 comprises the second beam carrying the second data stream in the direction of STA 1108, and also, carrying a null beam in the direction of STA 1106. As such, the transmission of the second data stream from AP 1104 to STA 1108 may fail. Additionally, the second beamforming transmission 1126 may interfere at STA 1106 with the first beamforming transmission 1124 by AP 1102.

As described herein, information of channel states, such as coherence times of channels between one or more STAs and one or more APs, may be shared among the APs for scheduling a coordinated beamforming transmission. A first AP may receive from a second AP a first frame comprising a parameter associated with a first coherence time of a first downlink channel between the second AP and a first STA associated with the second AP. The first AP may transmit a second frame indicating a first beamforming transmission by the second AP to the first STA associated with the second AP, based on receiving the first frame. A start time of the first beamforming transmission may be based on the parameter associated with the first coherence time of the first downlink channel. The second frame may further indicate a second beamforming transmission by the first AP to a second STA associated with the first AP. The second beamforming transmission may have a same start time and a same end time as the first beamforming transmission.

In some examples, AP 1102 may be the first AP and AP 1104 may be the second AP, such as shown in FIG. 12. STA 1108 may be the first STA and STA 1106 may be the second STA, such as shown in FIG. 12.

As described herein, a first AP may transmit to a second AP a third frame comprising a time offset. The time offset may represent a time difference/delay between a measurement of a sounding procedure and the first beamforming transmission. The sounding procedure may precede the first beamforming transmission. The first STA may calculate an estimate of the first downlink channel based on the sounding procedure. The second STA may respond to the third frame by transmitting the first frame based on whether the first coherence time of the first downlink channel is longer than the time offset.

In some examples, AP 1102 may be the first AP and AP 1104 may be the second AP, such as shown in FIG. 12. STA 1108 may be the first STA and STA 1106 may be the second STA, such as shown in FIG. 12.

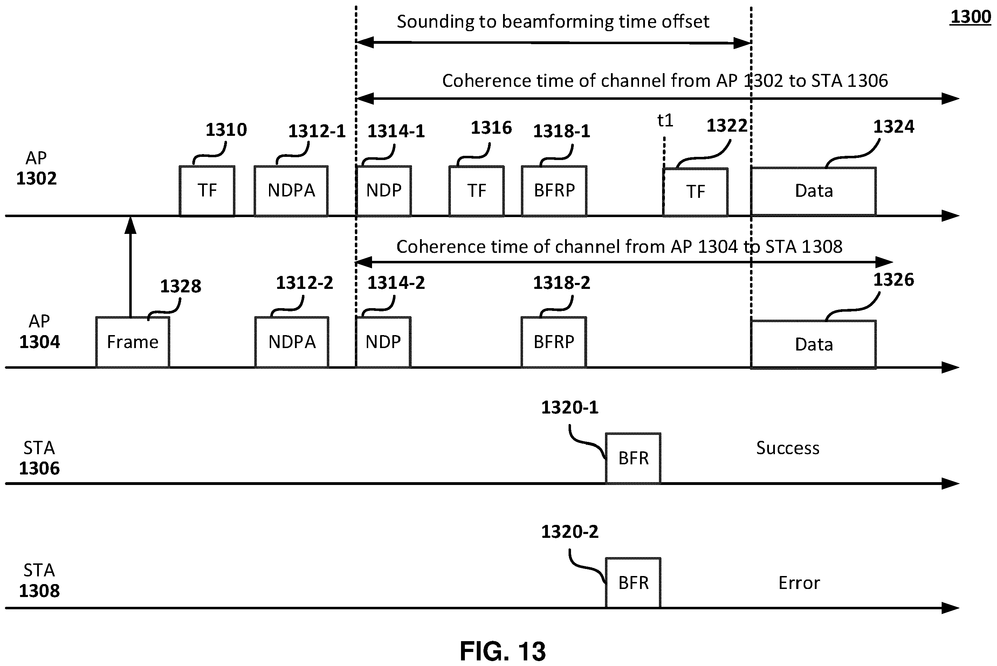

FIG. 13 shows an example 1300 of a coordinated beamforming procedure. As shown in FIG. 13, the example 1300 includes APs 1302 and 1304 and STAs 1306 and 1308. STAs 1306 and 1308 may be associated with APs 1302 and 1304, respectively. APs 1302 and 1304 may form a coordinated AP set. In the example 1300, AP 1302 may a master AP of the coordinated AP set and AP 1304 may be a slave AP of the coordinated AP set.

In some examples, the coordinated beamforming procedure may begin with AP 1304 transmitting a frame 1328 to AP 1302. Frame 1328 may be an unsolicited frame or may be a solicited frame solicited by AP 1302. For example, AP 1302 may transmit a trigger frame (not shown in FIG. 13) to AP 1304 and AP 1304 may respond to the trigger frame with frame 1328. In some examples, the trigger frame may be a frame that solicits a buffer status report (BSR) from AP 1304. Accordingly, frame 1328 may comprise a BSR of AP 1304. The BSR may indicate a queue size of buffered downlink traffic at AP 1304.

In some examples, frame 1328 may comprise a parameter associated with a first coherence time of a first downlink channel between AP 1304 and STA 1308 associated with AP 1304. In some examples, the parameter may indicate a value of the first coherence time. In some examples, the parameter may indicate a value based on the first coherence time. For example, the parameter may indicate a value shorter than the first coherence time.

In some examples, the parameter may indicate a time offset between a measurement of a sounding procedure (of the coordinated beamforming procedure) and a beamforming transmission by AP 1304 to STA 1308 (within the coordinated beamforming procedure). The sounding measurement may include the reception by STA 1308 of a frame (e.g., NDP frame 1314-1/1314-2) based on which STA 1308 may calculate an estimate of the downlink channel from AP 1304 (used in the beamforming transmission by AP 1304 to STA 1308).

In some examples, the time offset indicated by the parameter comprised in frame 1328 may represent a maximum allowable time difference/delay between the sounding measurement and the beamforming transmission by AP 1304 to STA 1308. The time difference/delay between the sounding measurement and the beamforming transmission by AP 1304 to STA 1308 may be determined as the time difference/delay between a start/end time of the sounding measurement (e.g., start/end of transmission of a sounding frame) and a start/end time of the beamforming transmission by AP 1304 to STA 1308. The time offset may be based on the first coherence time of the first downlink channel between AP 1304 and STA 1308.

In some examples, AP 1304 may perform a procedure to estimate the first coherence time of the first downlink channel between AP 1304 and 1308, before transmitting frame 1328. The procedure may be similar to the sounding phase in the example 1000, and the procedure may be periodically performed for measuring the change of the measured channel estimate versus time. Based on the rate of change versus time, an estimate of the first coherence time may be calculated by measuring the duration until the change exceeds a certain threshold (e.g., 50% or any other amount/percentage). In some examples, AP 1304 may determine the time offset between the sounding measurement and the beamforming transmission by AP 1304 to STA 1308 based on the estimated first coherence time of the first downlink channel between AP 1304 and STA 1308.

In some examples, as mentioned above, the coordinated beamforming procedure may include a sounding phase/procedure, within which APs 1302 and 1304 may acquire channel state information from STAs 1306 and 1308, respectively. The sounding phase/procedure may be performed before or after AP 1304 transmitting frame 1328 to AP 1302.

As shown in FIG. 13, the sounding phase/procedure may begin with AP 1302 transmitting a trigger frame 1310 to AP 1304. Trigger frame 1310 may trigger AP 1304 to perform a sounding procedure concurrently with AP 1302. APs 1302 and 1304 may initiate the sounding procedure by transmitting simultaneously NDPA frames 1312-1 and 1312-2 to STAs 1306 and 1308, respectively. NDPA frame 1312-1 may announce to STA 1306 the transmission of one or more sounding frames by AP 1302 to STA 1306. NDPA frame 1312-2 may announce to STA 1308 the transmission of one or more sounding frames by AP 1304 to STA 1308. NDPA frames 1312-1 and 1312-2 may be duplicate frames.

APs 1302 and 1304 may transmit simultaneously NDP frames 1314-1 and 1314-2 to STAs 1306 and 1308, respectively. NDP frames 1314-1 and 1314-2 may include LTFs corresponding to distinct spatial streams associated to APs 1102 and 1104, respectively. STAs 1306 and 1308 may each receive NDP frames 1314-1 and 1314-2 and use NDP frames 1314-1 and 1314-2 to estimate the downlink channel from AP 1302 and the downlink channel from AP 1304. For example, STA 1308 may estimate the first downlink channel between AP 1304 and STA 1308. In some examples, APs 1302 and 1304 may transmit NDP frames 1314-1 and 1314-2 sequentially. STAs 1306 and 1308 may each receive NDP frame 1314-1 and use NDP frame 1314-1 to estimate the downlink channel from AP 1302. Similarly, STAs 1306 and 1308 may each receive NDP frame 1314-2 and use NDP frame 1314-2 to estimate the downlink channel from AP 1304. The reception ofNDP frame 1314-1 and/or NDP frame 1314-2 by STA 1308 may represent the sounding measurement described herein.

AP 1302 may transmit a trigger frame 1316 to AP 1304. Trigger frame 1316 may trigger AP 1304 to perform a channel estimation polling procedure concurrently with AP 1302. APs 1302 and 1304 may initiate the channel estimation polling procedure by transmitting simultaneously BFRP frames 1318-1 and 1318-2 to retrieve the downlink channel estimates from STAs 1306 and 1308. STAs 1306 and 1308 may respond to BFRP frames 1318-1 and 1318-2 respectively by transmitting respectively BFR frames 1320-1 and 1320-2. BFR frame 1320-1, transmitted to AP 1302, may include an estimate of the downlink channel from AP 1302 to STA 1306 and an estimate of the downlink channel from AP 1304 to STA 1306. BFR frame 1320-2, transmitted to AP 1304, may include an estimate of the first downlink channel from AP 1304 to STA 1308 and an estimate of the downlink channel from AP 1302 to STA 1308.

In some examples (not shown in FIG. 13), APs 1302 and 1304 may exchange the downlink channel estimates received respectively from STAs 1306 and 1308. As such, AP 1302 may obtain from AP 1304 the estimate of the downlink channel from AP 1302 to STA 1308, and AP 1304 may obtain from AP 1302 the estimate of the downlink channel from AP 1304 to STA 1306. In some examples, the exchange of the downlink channel estimates may include AP 1302 transmitting a trigger frame to AP 1304 soliciting AP 1304 to send to AP 1302 the downlink channel estimates received from STA 1308. AP 1302 may include the downlink channel estimates received from STA 1306 in the trigger frame. Or, AP 1302 may include the downlink channel estimates received from STA 1306 in a separate frame and transmit to AP 1304. In some examples, the exchange of the downlink channel estimates may be performed via a backhaul link.

APs 1302 and 1304 may each compute a respective set of beamforming weights for a coordinated beamforming transmission comprising APs 1302 and 1304 by using the obtained downlink channel estimates. As shown in FIG. 13, the coordinated beamforming transmission may comprise a first beamforming transmission 1324 by AP 1302 and a second beamforming transmission 1326 by AP 1304. The first beamforming transmission 1324 and second beamforming transmission 1326 may overlap in time and frequency. In some examples, AP 1302 may compute a first set of beamforming weights for the first beamforming transmission 1324 based on the estimate of the downlink channel from AP 1302 to STA 1306 and/or on the estimate of the downlink channel from AP 1302 to STA 1308. Similarly, AP 1304 may compute a second set of beamforming weights for the second beamforming transmission 1326 based on the estimate of the downlink channel from AP 1304 to STA 1306 and/or on the estimate of the downlink channel from AP 1304 to STA 1308. In some examples, the first set of beamforming weights may be configured such that the first beamforming transmission 1324 may comprise a first beam carrying a first data stream in the direction of STA 1306 and a null beam in the direction of STA 1308. As such, the first beamforming transmission 1324 may not affect the capability of STA 1308 of receiving a frame from another STA (e.g., AP 1304). Similarly, the second set of beamforming weights may be configured such that the second beamforming transmission 1326 may comprise a second beam carrying a second data stream in the direction of STA 1308 and a null beam in the direction of STA 1306. As such, the second beamforming transmission 1326 may not affect the capability of STA 1306 to receive a frame from another STA (e.g., AP 1302).

In some examples, AP 1302 may transmit a trigger frame 1322 to trigger the first beamforming transmission 1324 and second beamforming transmission 1326. Trigger frame 1322 may indicate the first beamforming transmission 1324 and/or second beamforming transmission 1326. APs 1302 and 1304 may begin the first beamforming transmission 1324 and second beamforming transmission 1326 a SIFS after transmission of trigger frame 1322 by AP 1302. In some examples, AP 1302 may transmit trigger frame 1322 at a time t1 that guarantees that a time delay between the sounding measurement by STA 1308 and the coordinated beamforming transmission (which includes the first beamforming transmission 1324) is shorter than the coherence time of the first downlink channel from AP 1304 to STA 1308. In some examples, AP 1302 may determine a start time of the second beamforming transmission 1326 based on the parameter associated with the first coherence time of the first downlink channel between AP 1304 and STA 1308 comprised in frame 1328. The parameter may comprise the first coherence time or a time offset as described herein. AP 1302 may determine the transmission time t1 of trigger frame 1322 based on the start time of the second beamforming transmission 1326 (e.g., a SIFS before the start time of first beamforming transmission 1326).

In some examples, the first beamforming transmission 1324 may have a same start time and a same end time as the second beamforming transmission 1326. The transmission time t1 of trigger frame 1322 (and by consequence, the start time of the first beamforming transmission 1324 and second beamforming transmission 1326) may thus further be based on a second coherence time of a second downlink channel between AP 1302 and STA 1306. In some examples, the transmission time t1 of trigger frame 1322 (and by consequence, the start time of the first beamforming transmission 1324 and second beamforming transmission 1326) may be based on the shorter of the first coherence time and the second coherence time. For example, as shown in FIG. 13, with the first coherence time shorter than the second coherence time, the transmission time t1 of trigger frame 1322 may be based on the first coherence time. This ensures that the second beamforming transmission 1326 ends before expiration of the first coherence time.

In some examples, the transmission time t1 of trigger frame 1322 (and by consequence, the start time of the first beamforming transmission 1324 and the second beamforming transmission 1326) may further be based on a third coherence time of a third downlink channel between AP 1302 and STA 1308 and/or a fourth coherence time of a fourth downlink channel between AP 1304 and STA 1306.

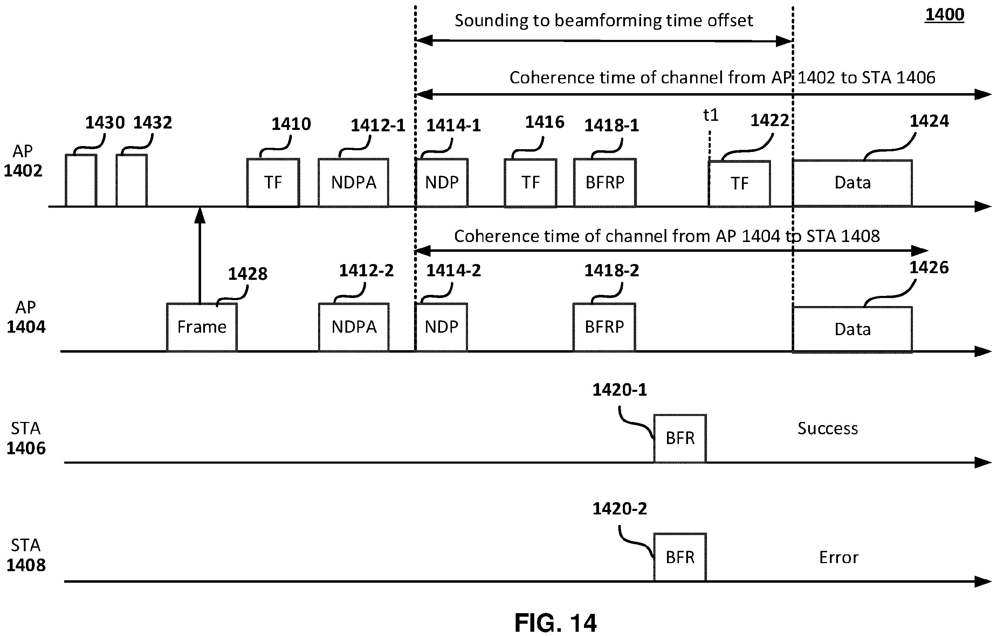

FIG. 14 shows an example 1400 of a coordinated beamforming procedure. As shown in FIG. 14, the example 1400 includes APs 1402 and 1404 and STAs 1406 and 1408. STAs 1406 and 1408 may be associated with APs 1402 and 1404 respectively. APs 1402 and 1404 may form a coordinated AP set. In the example 1400, AP 1402 may be a master AP of the coordinated AP set and AP 1404 may be a slave AP of the coordinated AP set.

In some examples, the coordinated beamforming procedure may begin with AP 1402 transmitting a frame 1430. Frame 1430 may be a broadcast frame (e.g., a beacon frame) or a unicast frame for AP 1404. In some examples, frame 1430 may indicate/advertise a time offset between a measurement of a sounding procedure (of the coordinated beamforming procedure) and a beamforming transmission based on the sounding measurement (within the coordinated beamforming procedure). In some examples, the sounding measurement may include the reception of a destination STA of the beamforming transmission of a frame based on which the destination STA calculates an estimate of a downlink channel used in the beamforming transmission. In some examples, the time offset indicated/advertised in frame 1430 may represent a maximum time difference/delay between the sounding measurement and the beamforming transmission. The time difference/delay between the sounding measurement and the beamforming may be guaranteed to be not larger than the time offset indicated/advertised in frame 1430. The time difference between the sounding measurement and the beamforming transmission may be determined as the time difference between a start/end time of the sounding measurement and a start/end time of the beamforming transmission.

AP 1402 may transmit a frame 1432 to AP 1404. Frame 1432 may solicit a BSR from AP 1404 for a coordinated beamforming transmission. The coordinated beamforming transmission may comprise a beamforming transmission by AP 1404 and a beamforming transmission by another AP (e.g., AP 1402). In some examples, frame 1432 may comprise a buffer status report (BSRP) frame.

In some examples, AP 1404 may respond to frame 1432 by transmitting frame 1428 to AP 1402. Frame 1428 may comprise a BSR of AP 1404. The BSR may indicate a queue size of buffered downlink traffic at AP 1404. In some examples, frame 1428 may further indicate whether AP 1404 wishes to participate in the coordinated beamforming transmission. In some examples, AP 1404 may determine whether to participate in the coordinated beamforming transmission based on the time offset indicated/advertised in frame 1430. In some examples, AP 1404 may compare the time offset indicated/advertised in frame 1430 with a first coherence time of a first downlink channel between AP 1404 and STA 1408 associated with AP 1404. AP 1404 may determine to participate in the coordinated beamforming transmission if the time offset indicated/advertised in frame 1430 is less than or equal to (e.g., not longer than) the first coherence time. AP 1404 may determine not to participate in the coordinated beamforming transmission if the time offset indicated/advertised in frame 1430 is longer than the first coherence time. In some examples, AP 1404 may indicate its wish to participate in the coordinated beamforming transmission by including an identifier of STA 1408 in frame 1428. In some examples, AP 1404 may include in frame 1428 a parameter associated with the first coherence time of the first downlink channel between AP 1404 and STA 1408 associated with AP 1404.

In some examples, AP 1404 may perform a procedure to estimate the first coherence time of the first downlink channel between AP 1404 and 1408, before transmitting frame 1428. The procedure may be similar to the sounding phase in the example 1000, but may be periodically performed for measuring the change of the measured channel estimate versus time. Based on the rate of change versus time, an estimate of the first coherence time may be calculated by measuring the duration until the change exceeds a certain threshold (e.g., 50% or any other amount/percentage).

In some examples, the coordinated beamforming procedure may include a sounding phase/procedure, within which APs 1402 and 1404 may acquire channel state information from STAs 1406 and 1408, respectively. The sounding phase/procedure may be performed before or after AP 1404 transmitting frame 1428 to AP 1402.

As shown in FIG. 14, the sounding phase/procedure may begin with AP 1402 transmitting a trigger frame 1410 to AP 1404. Trigger frame 1410 triggers AP 1404 to perform a sounding procedure concurrently with AP 1402. APs 1402 and 1404 may initiate the sounding procedure by transmitting simultaneously NDPA frames 1412-1 and 1412-2 to STAs 1406 and 1408, respectively. NDPA frame 1412-1 may announce to STA 1406 the transmission of one or more sounding frames by AP 1402 to STA 1406. NDPA frame 1412-2 may announce to STA 1408 the transmission of one or more sounding frames by AP 1404 to STA 1408. NDPA frames 1412-1 and 1412-2 may be duplicate frames.

APs 1402 and 1404 may transmit simultaneously NDP frames 1414-1 and 1414-2 to STAs 1406 and 1408, respectively. NDP frames 1414-1 and 1414-2 may include LTFs corresponding to distinct spatial streams associated to APs 1402 and 1404, respectively. STAs 1406 and 1408 may each receive NDP frames 1414-1 and 1414-2 and use NDP frames 1414-1 and 1414-2 to estimate the downlink channel from AP 1402 and the downlink channel from AP 1404. For example, STA 1408 may estimate the first downlink channel between AP 1404 and STA 1408. In some examples, APs 1402 and 1404 may transmit NDP frames 1414-1 and 1414-2 sequentially. STAs 1406 and 1408 may each receive NDP frame 1414-1 and use NDP frame 1414-1 to estimate the downlink channel from AP 1402. Similarly, STAs 1406 and 1408 may each receive NDP frame 1414-2 and use NDP frame 1414-2 to estimate the downlink channel from AP 1404. The reception ofNDP frame 1414-1 and/or NDP frame 1414-2 by STA 1408 may represent the sounding measurement described herein.

AP 1402 may transmit a trigger frame 1416 to AP 1404. Trigger frame 1416 triggers AP 1404 to perform a channel estimation polling procedure concurrently with AP 1402. APs 1402 and 1404 may initiate the channel estimation polling procedure by transmitting simultaneously BFRP frames 1418-1 and 1418-2 to retrieve the downlink channel estimates from STAs 1406 and 1408. STAs 1406 and 1408 may respond to BFRP frames 1418-1 and 1418-2 respectively by transmitting respectively BFR frames 1420-1 and 1420-2. BFR frame 1420-1, transmitted to AP 1402, may include an estimate of the downlink channel from AP 1402 to STA 1406 and an estimate of the downlink channel from AP 1404 to STA 1406. BFR frame 1420-2, transmitted to AP 1404, may include an estimate of the first downlink channel from AP 1404 to STA 1408 and an estimate of the downlink channel from AP 1402 to STA 1408.

In some examples (not shown in FIG. 14), APs 1402 and 1404 may exchange the downlink channel estimates received respectively from STAs 1406 and 1408. As such, AP 1402 may obtain from AP 1404 the estimate of the downlink channel from AP 1402 to STA 1408, and AP 1404 may obtain from AP 1402 the estimate of the downlink channel from AP 1404 to STA 1406. In some examples, the exchange of the downlink channel estimates may include AP 1402 transmitting a trigger frame to AP 1404 soliciting AP 1404 to send to AP 1402 the downlink channel estimates received from STA 1408. AP 1402 may include the downlink channel estimates received from STA 1406 in the trigger frame. Or AP 1402 may include the downlink channel estimates received from STA 1406 in a separate frame and transmit to AP 1404. In some examples, the exchange of the downlink channel estimates may be performed via a backhaul link.

In the example 1400, APs 1402 and 1404 may each compute a respective set of beamforming weights for a coordinated beamforming transmission comprising APs 1402 and 1404, by using the obtained downlink channel estimates. As shown in FIG. 14, the coordinated beamforming transmission may comprise a first beamforming transmission 1424 by AP 1402 and a second beamforming transmission by AP 1404. The first beamforming transmission 1424 and second beamforming transmission 1426 may overlap in time and frequency. In some examples, AP 1402 may compute a first set of beamforming weights for the first beamforming transmission 1424 based on the estimate of the downlink channel from AP 1402 to STA 1406 and/or on the estimate of the downlink channel from AP 1402 to STA 1408. Similarly, AP 1404 may compute a second set of beamforming weights for the second beamforming transmission 1426 based on the estimate of the downlink channel from AP 1404 to STA 1406 and/or on the estimate of the downlink channel from AP 1404 to STA 1408. In some examples, the first set of beamforming weights may be configured such that the first beamforming transmission 1424 may comprise a first beam carrying a first data stream in the direction of STA 1406 and a null beam in the direction of STA 1408. As such, beamforming transmission 1424 may not affect the capability of STA 1408 to receive a frame from another STA (e.g., AP 1404). Similarly, the second set of beamforming weights may be configured such that the second beamforming transmission 1426 may comprise a second beam carrying a second data stream in the direction of STA 1408 and a null beam in the direction of STA 1406. As such, beamforming transmission 1426 may not affect the capability of STA 1406 to receive a frame from another STA (e.g., AP 1402).

In some examples, AP 1402 may transmit a trigger frame 1422 to trigger the first beamforming transmission 1424 and the second beamforming transmission 1426. Trigger frame 1422 may indicate the first beamforming transmission 1424 and/or the second beamforming transmission 1426. APs 1402 and 1404 may begin the first beamforming transmission 1424 and the second beamforming transmission 1426 a SIFS after transmission of trigger frame 1422 by AP 1402. In some examples, AP 1402 may transmit trigger frame 1422 at a time t1 that guarantees that a time delay between the sounding measurement by STA 1408 and the coordinated beamforming transmission (which may include the first beamforming transmission 1424) is not longer than the time offset indicated/advertised in frame 1430. As the time offset indicated/advertised in frame 1430 is less than or equal to (e.g., not longer than) the first coherence of the first downlink channel between AP 1404 and STA 1408, this ensures that the second beamforming transmission 1426 ends before expiration of the first coherence time.

In some examples, the first beamforming transmission 1424 may have a same start time and a same end time as the second beamforming transmission 1426. In some examples, the time offset indicated/advertised in frame 1430 may be based on a second coherence time of a second downlink channel between AP 1402 and STA 1406. For example, the time offset indicated/advertised in frame 1430 may be selected to be shorter than the second coherence time of the second downlink channel between AP 1402 and STA 1406. This ensures that first beamforming transmission 1424 ends before expiration of the second coherence time.

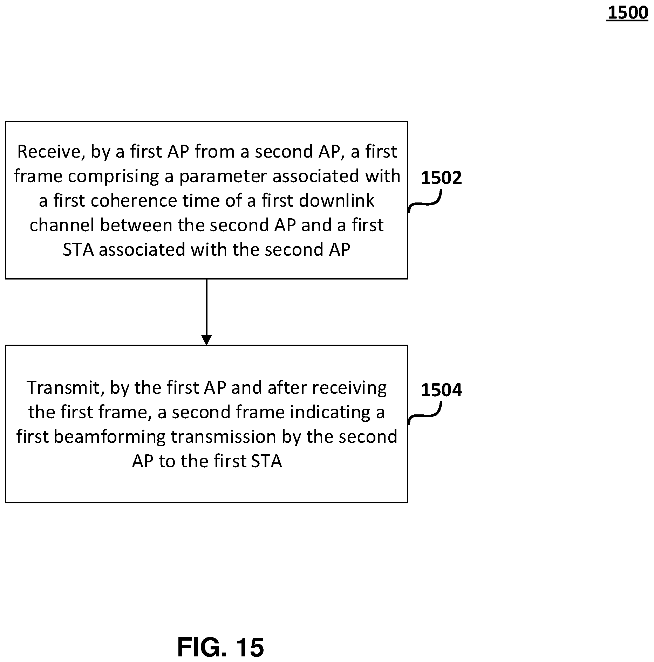

FIG. 15 shows an example 1500 for coordinating beamforming. The example 1500 may be performed by a first AP, such as AP 1302 or 1402, within a coordinated beamforming procedure. The first AP may form a coordinated AP set with a second AP, such as AP 1304 or AP 1404. The first AP may be the master AP of the coordinated AP and the second AP may be the slave AP of the coordinated AP set. As shown in FIG. 15, the example 1500 may include steps 1502 and 1504.

Step 1502 includes receiving, by the first AP from the second AP, a first frame comprising a parameter associated with a first coherence time of a first downlink channel between the second AP and a first STA, such as 1308 or 1408, associated with the second AP.

In some examples, the parameter may indicate a value of the first coherence time. In some examples, the parameter may indicate a value based on the first coherence time. For example, the parameter may indicate a value shorter than the first coherence time.

In some examples, the parameter may indicate a time offset between a measurement of a sounding procedure (of the coordinated beamforming procedure) and a beamforming transmission by the second AP to the first STA (within the coordinated beamforming procedure). The sounding measurement may include the reception by the first STA of a frame based on which the first STA may calculate an estimate of the first downlink (used in the beamforming transmission by the second AP to the first STA). In some examples, the sounding procedure may be a joint sounding procedure performed by the first AP and the second AP.

In some examples, the time offset indicated by the parameter comprised in the first frame may represent a maximum allowable time difference/delay between the sounding measurement and the beamforming transmission by the second AP to the first STA. The time difference/delay between the sounding measurement and the beamforming transmission by the second AP to the first STA may be determined as the time difference/delay between a start/end time of the sounding measurement (e.g., start/end of transmission of a sounding frame) and a start/end time of the beamforming transmission by the second AP to the first STA. The time offset may be based on the first coherence time of the first downlink channel between the second AP and the first STA.

Step 1504 includes transmitting, by the first AP and after receiving the first frame, a second frame indicating a first beamforming transmission by the second AP to the first STA. In some examples, the second frame further indicates a second beamforming transmission by the first AP to a second STA, such as 1306 or 1406, associated with the first AP. The first beamforming transmission and the second beamforming transmission may form a coordinated beamforming transmission. In some examples, the second frame may comprise a trigger frame that triggers the coordinated beamforming transmission.

In some examples, the first beamforming transmission may comprise a first beam carrying a third frame in the direction of the first STA and a null beam in the direction of the second STA. The second beamforming transmission may comprise a second beam carrying a fourth frame in the direction of the second STA and a null beam in the direction of the first STA. In some examples, the first beamforming transmission may comprise a first beam carrying a third frame in the direction of the first STA and a second beam carrying a fourth frame in the direction of the second STA. The second beamforming transmission may comprise a third beam carrying the fourth frame in the direction of the second STA and a fourth beam carrying the third frame in the direction of the first STA.

In some examples, a start time of the first beamforming transmission is based on the parameter associated with the first coherence time. In some examples, the start time of the first beamforming transmission is a SIFS after transmission of the second frame. In some examples, where the first coherence time is longer than a second coherence time of a second downlink channel between the first AP and the second STA associated with the first AP, the start time of the first beamforming transmission may be based on the second coherence time.

In some examples, the example 1500 may further comprise transmitting, by the first AP to the second AP, a frame that triggers the second AP to perform the sounding procedure.

In some examples, the example 1500 may further comprise transmitting, by the first AP to the second AP, a frame soliciting a BSR from the second AP. The first frame may be received based on the soliciting frame.

In some examples, the example 1500 may further comprise transmitting, by the first AP, a fifth frame comprising a time offset. In some examples, the time offset may represent a time difference between a measurement of the sounding procedure (of the coordinated beamforming procedure) and a beamforming transmission based on the sounding measurement (within the coordinated beamforming procedure). In some examples, the sounding measurement may include the reception of a destination STA of the beamforming transmission of a frame based on which the destination STA may calculate an estimate of a downlink channel used in the beamforming transmission. In some examples, the time offset may represent a maximum time difference/delay between the sounding measurement and the beamforming transmission. The time difference between the sounding measurement and the beamforming transmission may be determined as the time difference between a start/end time of the sounding measurement and a start/end time of the beamforming transmission.

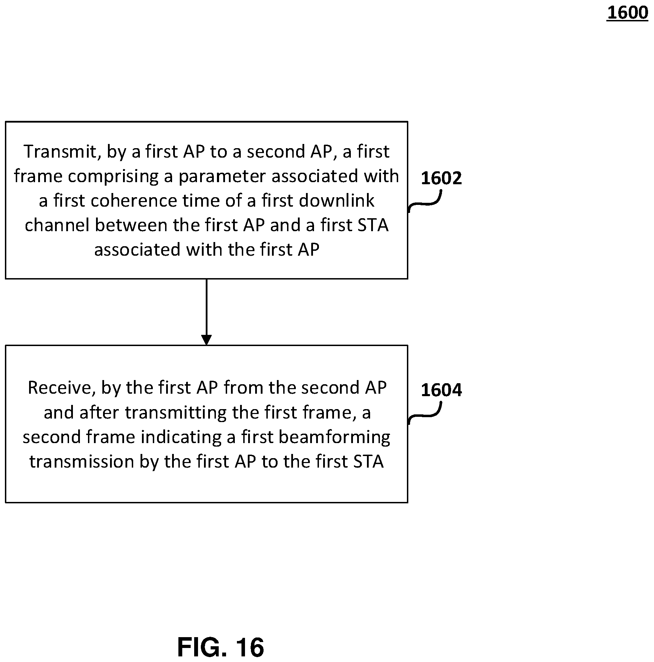

FIG. 16 shows an example 1600 for coordinating beamforming. The example 1600 may be performed by a first AP, such as AP 1304 or AP 1404, within a coordinated beamforming procedure. The first AP may form a coordinated AP set with a second AP, such as AP 1302 or AP 1402. The first AP may be the slave AP of the coordinated AP and the second AP may be the master AP of the coordinated AP set. As shown in FIG. 16, the example 1600 may include steps 1602 and 1604.

Step 1602 includes transmitting, by the first AP to the second AP, a first frame comprising a parameter associated with a first coherence time of a first downlink channel between the first AP and a first STA, such as 1308 or 1408, associated with the first AP.

In some examples, the parameter may indicate a value of the first coherence time. In some examples, the parameter may indicate a value based on the first coherence time. For example, the parameter may indicate a value shorter than the first coherence time.

In some examples, the parameter may indicate a time offset between a measurement of a sounding procedure (of the coordinated beamforming procedure) and a beamforming transmission by the first AP to the first STA (within the coordinated beamforming procedure). The sounding measurement may include the reception by the first STA of a frame based on which the first STA may calculate an estimate of the first downlink (used in the beamforming transmission by the first AP to the first STA). In some examples, the sounding procedure may be a joint sounding procedure performed by the first AP and the second AP.

In some examples, the time offset indicated by the parameter comprised in the first frame may represent a maximum allowable time difference/delay between the sounding measurement and the beamforming transmission by the first AP to the first STA. The time difference/delay between the sounding measurement and the beamforming transmission by the first AP to the first STA may be determined as the time difference/delay between a start/end time of the sounding measurement (e.g., start/end of transmission of a sounding frame) and a start/end time of the beamforming transmission by the first AP to the first STA. The time offset may be based on the first coherence time of the first downlink channel between the first AP and the first STA.

Step 1604 includes receiving, by the first AP from the second AP and after transmitting the first frame, a second frame indicating a first beamforming transmission by the first AP to the first STA. In some examples, the second frame may further indicate a second beamforming transmission by the second AP to a second STA, such as 1306 or 1406, associated with the second AP. The first beamforming transmission and the second beamforming transmission may form a coordinated beamforming transmission. In some examples, the second frame may comprise a trigger frame that triggers the coordinated beamforming transmission.

In some examples, the first beamforming transmission may comprise a first beam carrying a third frame in the direction of the first STA and a null beam in the direction of the second STA. The second beamforming transmission may comprise a second beam carrying a fourth frame in the direction of the second STA and a null beam in the direction of the first STA. In some examples, the first beamforming transmission may comprise a first beam carrying a third frame in the direction of the first STA and a second beam carrying a fourth frame in the direction of the second STA. The second beamforming transmission may comprise a third beam carrying the fourth frame in the direction of the second STA and a fourth beam carrying the third frame in the direction of the first STA.

In some examples, a start time of the first beamforming transmission may be based on the parameter associated with the first coherence time. In some examples, the start time of the first beamforming transmission may be a SIFS after reception of the second frame. In some examples, where the first coherence time may be longer than a second coherence time of a second downlink channel between the second AP and the second STA associated with the second AP, the start time of the first beamforming transmission may be based on the second coherence time.

In some examples, the example 1600 may further comprise receiving, by the first AP from the second AP, a frame that triggers the first AP to perform the sounding procedure.

In some examples, the example 1600 may further comprise receiving, by the first AP from the second AP, a frame soliciting a BSR from the first AP. The first frame may be transmitted based on the soliciting frame.

In some examples, the example 1600 may further comprise receiving, by the first AP from the second AP, a fifth frame comprising a time offset. In some examples, the time offset may represent a time difference between a measurement of the sounding procedure (of the coordinated beamforming procedure) and a beamforming transmission based on the sounding measurement (within the coordinated beamforming procedure). In some examples, the sounding measurement may include the reception of a destination STA of the beamforming transmission of a frame based on which the destination STA may calculate an estimate of a downlink channel used in the beamforming transmission. In some examples, the time offset may represent a maximum time difference/delay between the sounding measurement and the beamforming transmission. The time difference between the sounding measurement and the beamforming transmission may be determined as the time difference between a start/end time of the sounding measurement and a start/end time of the beamforming transmission.

In some examples, transmitting the first frame by the first AP may comprise transmitting the first frame on condition of the first coherence time being longer than the time offset indicated in the fifth frame.

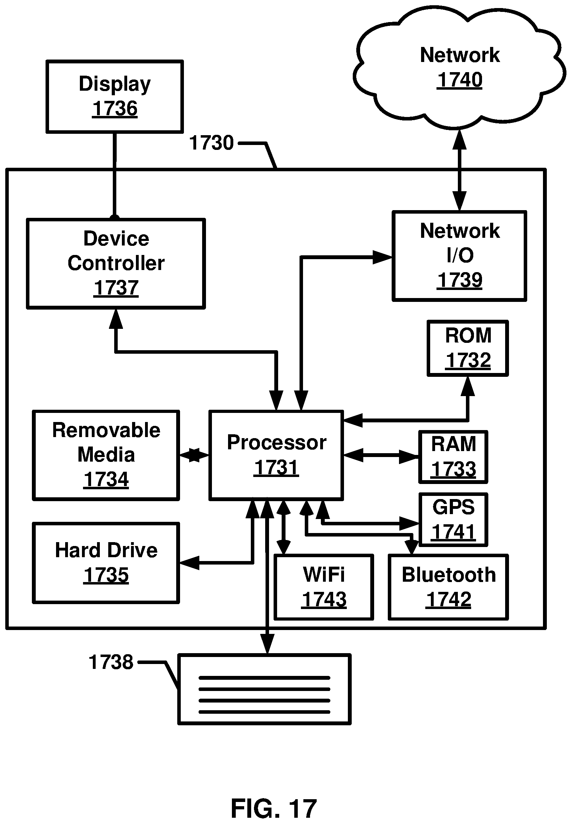

FIG. 17 shows example elements of a computing device that may be used to implement any of the various devices described herein, including, for example, a STA, an AP, communication devices, and/or any computing and/or communication device described herein. The computing device 1730 may comprise one or more processors 1731, which may execute instructions stored in the random-access memory (RAM) 1733, the removable media 1734 (such as a Universal Serial Bus (USB) drive, compact disk (CD) or digital versatile disk (DVD), or floppy disk drive), or any other desired storage medium. Instructions may also be stored in an attached (or internal) hard drive 1735. The computing device 1730 may also comprise a security processor (not shown), which may execute instructions of one or more computer programs to monitor the processes executing on the processor 1731 and any process that requests access to any hardware and/or software components of the computing device 1730 (e.g., ROM 1732, RAM 1733, the removable media 1734, the hard drive 1735, the device controller 1737, a network interface 1739, a GPS 1741, a Bluetooth interface 1742, a WiFi interface 1743, etc.). The computing device 1730 may comprise one or more output devices, such as the display 1736 (e.g., a screen, a display device, a monitor, a television, etc.), and may comprise one or more output device controllers 1737, such as a video processor. There may also be one or more user input devices 1738, such as a remote control, keyboard, mouse, touch screen, microphone, etc. The computing device 1730 may also comprise one or more network interfaces, such as a network interface 1739, which may be a wired interface, a wireless interface, or a combination of the two. The network interface 1739 may provide an interface for the computing device 1730 to communicate with a network 1740 (e.g., a RAN, or any other network). The network interface 1739 may comprise a modem (e.g., a cable modem), and the external network 1740 may comprise communication links, an external network, an in-home network, a provider's wireless, coaxial, fiber, or hybrid fiber/coaxial distribution system (e.g., a DOCSIS network), or any other desired network. Additionally, the computing device 1730 may comprise a location-detecting device, such as a global positioning system (GPS) microprocessor 1741, which may be configured to receive and process global positioning signals and determine, with possible assistance from an external server and antenna, a geographic position of the computing device 1730.

The example in FIG. 17 may be a hardware configuration, although the components shown may be implemented as software as well. Modifications may be made to add, remove, combine, divide, etc. components of the computing device 1730 as desired. Additionally, the components may be implemented using basic computing devices and components, and the same components (e.g., processor 1731, ROM storage 1732, display 1736, etc.) may be used to implement any of the other computing devices and components described herein. For example, the various components described herein may be implemented using computing devices having components such as a processor executing computer-executable instructions stored on a computer-readable medium, as shown in FIG. 17. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a first access point from a second access point, a first frame comprising a parameter associated with a first coherence time of a first downlink channel between the second access point and a first station associated with the second access point.

Clause 2. The method of clause 1, further comprising: sending, by the first access point and based on receiving the first frame, a second frame indicating a first beamforming transmission by the second access point to the first station.

Clause 3. The method of clause 1 or clause 2, wherein a start time of the first beamforming transmission is based on the parameter associated with the first coherence time.

Clause 4. The method of any one of clauses 1 to 3, wherein the second frame further indicates a second beamforming transmission by the first access point to a second station associated with the first access point.

Clause 5. The method of any one of clauses 1 to 4, further comprising: sending, by the first access point to the second access point, a fifth frame configured to trigger the second access point to perform a sounding procedure, wherein the fifth frame is configured to solicit a buffer status report, and wherein the receiving, by the first access point from the second access point, the first frame comprises receiving the first frame based on the fifth frame; and wherein the first frame further comprises an indication of a time offset, and wherein the time offset comprises a time difference between a measurement of the sounding procedure and the first beamforming transmission.

Clause 6. A method comprising: sending, by a second access point to a first access point, a first frame comprising a parameter associated with a first coherence time of a first downlink channel between the second access point and a first station associated with the second access point.

Clause 7. The method of clause 6, further comprising: receiving, by the second access point from the first access point and based on sending the first frame, a second frame indicating a first beamforming transmission by the second access point to the first station.

Clause 8. The method of clause 6 or clause 7, wherein a start time of the first beamforming transmission is based on the parameter associated with the first coherence time.

Clause 9. The method of any one of clauses 6-8, wherein the second frame further indicates a second beamforming transmission by the first access point to a second station associated with the first access point.

Clause 10. The method of any one of clauses 6-9, wherein the first beamforming transmission comprises a first beam carrying a third frame in a direction of the first station and a null beam in a direction of the second station, and wherein the second beamforming transmission comprises a second beam carrying a fourth frame in a direction of the second station and a null beam in a direction of the first station.

Clause 11. The method of any one of clauses 6-10, wherein the first beamforming transmission comprises a first beam carrying a third frame in a direction of the first station and a second beam carrying a fourth frame in a direction of the second station, and wherein the second beamforming transmission comprises a third beam carrying the fourth frame in a direction of the second station and a fourth beam carrying the third frame in a direction of the first station.

Clause 12. The method of any one of clauses 6-11, further comprising: receiving, by the second access point from the first access point, a fifth frame configured to trigger the second access point to perform a sounding procedure, wherein the fifth frame is configured to solicit a buffer status report, and wherein the sending, by the second access point to the first access point, the first frame comprises sending the first frame based on the fifth frame; and wherein the first frame further comprises an indication of a time offset, and wherein the time offset comprises a time difference between a measurement of the sounding procedure and the first beamforming transmission.

Clause 13. The method of any one of clauses 6-12, wherein the first coherence time is longer than the time offset.

Clause 14. A method comprising: receiving, by a first station from a first access point, a first frame indicating a first beamforming transmission by a second access point to the first station.

Clause 15. The method of clause 14, further comprising: receiving, by the first station from the first access point, a second beamforming transmission by the first access point to a second station associated with the first access point.

Clause 16. The method of clause 14 or clause 15, wherein the first beamforming transmission is based on the first access point receiving a parameter associated with a first coherence time of a first downlink channel between the second access point and the first station associated with the second access point.

Clause 17. The method of clause 4, or any one of clauses 14-16, wherein the first beamforming transmission comprises a first beam carrying the first frame in a direction of the first station and a null beam in a direction of the second station, and wherein the second beamforming transmission comprises a second beam carrying a second frame in a direction of the second station and a null beam in a direction of the first station.

Clause 18. The method of clause 4, or any one of clauses 14-17, wherein the first beamforming transmission comprises a first beam carrying the first frame in a direction of the first station and a second beam carrying a second frame in a direction of the second station, and wherein the second beamforming transmission comprises a third beam carrying the second frame in a direction of the second station and a fourth beam carrying the first frame in a direction of the first station.

Clause 19. The method of any one of clauses 14-18, wherein a start time of the first beamforming transmission is based on the parameter associated with the first coherence time.

Clause 20. The method of clause 4, or any one of clauses 14-19, wherein the first coherence time is longer than a second coherence time of a second downlink channel between the first access point and the second station associated with the first access point.

Clause 21. A computing device comprising: one or more processors.

Clause 22. The computing device of clause 21, further comprising: memory storing instructions that, when executed by the one or more processors, cause the computing device to perform the method of any one of clauses 1 to 20.

Clause 23. A system comprising: a station configured to perform the method of any one of clauses 14 to 20.

Clause 24. The system of clause 23, further comprising: an access point configured to receive the first frame, the second frame, or the fifth frame.

Clause 25. A computer-readable medium storing instructions that, when executed, cause performance of the method of any one of clauses 1 to 20.

Clause 26. A method comprising: receiving, by a first access point (AP) from a second AP, a first frame comprising a parameter associated with a coherence time of a downlink channel between the second AP and a station (STA) associated with the second AP.

Clause 27. The method of clause 26, further comprising: transmitting, by the first AP, a second frame announcing a coordinated beamforming (CBF) transmission by the first AP and the second AP, wherein a start time of the CBF transmission is based on the parameter associated with the coherence time of the downlink channel.

Clause 28. A method comprising: receiving, by a first access point (AP) from a second AP, a first frame comprising a parameter associated with a first coherence time of a first downlink channel between the second AP and a first station (STA) associated with the second AP.

Clause 29. The method of clause 28, further comprising: transmitting, by the first AP and after receiving the first frame, a second frame indicating a first beamforming transmission by the second AP to the first STA.

Clause 30. The method of clause 28 or clause 29, wherein a start time of the first beamforming transmission is based on the parameter associated with the first coherence time.

Clause 31. The method of any one of clauses 28-30, wherein the second frame further indicates a second beamforming transmission by the first AP to a second STA associated with the first AP.

Clause 32. The method of any one of clauses 28-31, further comprising: transmitting, by the first AP to the second AP, a third frame that triggers the second AP to perform a sounding procedure.

Clause 33. The method of any one of clauses 28-32, further comprising transmitting, by the first AP, a fourth frame comprising a time offset.

Clause 34. The method of any one of clauses 28-33, wherein the time offset comprises a time difference between a measurement of the sounding procedure and the first beamforming transmission.

Clause 35. The method of any one of clauses 28-34, wherein the sounding procedure is a joint sounding procedure comprising the first AP and the second AP.

Clause 36. The method of any one of clauses 28-35, further comprising: transmitting, by the first AP to the second AP, a third frame soliciting a buffer status report (BSR), and wherein receiving the first frame comprises receiving the first frame in response to the third frame.

Clause 37. The method of any one of clauses 28-36, wherein the first frame further comprises an indication of a time offset.

Clause 38. The method of any one of clauses 28-37, wherein the time offset comprises a maximum allowable time difference between a measurement of a sounding procedure and the first beamforming transmission.

Clause 39. The method of any one of clauses 28-38, wherein the first beamforming transmission comprises a first beam carrying a third frame in the direction of the first STA and a null beam in the direction of the second STA, and wherein the second beamforming transmission comprises a second beam carrying a fourth frame in the direction of the second STA and a null beam in the direction of the first STA.

Clause 40. The method of any one of clauses 28-39, wherein the first beamforming transmission comprises a first beam carrying a third frame in the direction of the first STA and a second beam carrying a fourth frame in the direction of the second STA, and wherein the second beamforming transmission comprises a third beam carrying the fourth frame in the direction of the second STA and a fourth beam carrying the third frame in the direction of the first STA.

Clause 41. The method of any one of clauses 28-40, wherein the first coherence time is longer than a second coherence time of a second downlink channel between the first AP and the second STA associated with the first AP.

Clause 42. The method of any one of clauses 28-41, wherein a start time of the first beamforming transmission is based on the second coherence time.

Clause 43. The method of any one of clauses 28-42, wherein the first AP and second AP are members of a coordinating AP set, wherein the first AP is a master AP and the second AP is a slave AP.

Clause 44. A method comprising: transmitting, by a first access point (AP) to a second AP, a first frame comprising a parameter associated with a coherence time of a downlink channel between the first AP and a station (STA) associated with the first AP.

Clause 45. The method of clause 44, further comprising: receiving, by the first AP from the second AP, a second frame announcing a coordinated beamforming (CBF) transmission by the first AP and the second AP, wherein a start time of the CBF transmission is based on the parameter associated with the coherence time of the downlink channel.

Clause 46. A method comprising: transmitting, by a first access point (AP) to a second AP, a first frame comprising a parameter associated with a first coherence time of a first downlink channel between the first AP and a first station (STA) associated with the first AP.

Clause 47. The method of clause 46, further comprising: receiving, by the first AP from the second AP and after transmitting the first frame, a second frame indicating a first beamforming transmission by the first AP to the first STA.

Clause 48. The method of clause 46 or clause 47, wherein a start time of the first beamforming transmission is based on the parameter associated with the first coherence time.

Clause 49. The method of any one of clauses 46-48, wherein the second frame further indicates a second beamforming transmission by the second AP to a second STA associated with the second AP.

Clause 50. The method of any one of clauses 46-49, further comprising: receiving, by the first AP from the second AP, a third frame that triggers the first AP to perform a sounding procedure.

Clause 51. The method of any one of clauses 46-50, further comprising: receiving, by the first AP from the second AP, a fourth frame comprising a time offset.

Clause 52. The method of any one of clauses 46-51, wherein the time offset comprises a time difference between a measurement of the sounding procedure and the first beamforming transmission.

Clause 53. The method of any one of clauses 46-52, wherein the sounding procedure is a joint sounding procedure comprising the first AP and the second AP.

Clause 54. The method of any one of clauses 46-53, further comprising: receiving, by the first AP from the second AP, a third frame soliciting a buffer status report (BSR), and wherein transmitting the first frame comprises transmitting the first frame in response to the third frame.

Clause 55. The method of any one of clauses 46-54, wherein the first frame further comprises an indication of a time offset.

Clause 56. The method of any one of clauses 46-55, wherein the time offset comprises a maximum allowable time difference between a measurement of a sounding procedure and the first beamforming transmission.

Clause 57. The method of any one of clauses 46-56, wherein the first beamforming transmission comprises a first beam carrying a third frame in the direction of the first STA and a null beam in the direction of the second STA, and wherein the second beamforming transmission comprises a second beam carrying a fourth frame in the direction of the second STA and a null beam in the direction of the first STA.

Clause 58. The method of any one of clauses 46-57, wherein the first beamforming transmission comprises a first beam carrying a third frame in the direction of the first STA and a second beam carrying a fourth frame in the direction of the second STA, and wherein the second beamforming transmission comprises a third beam carrying the fourth frame in the direction of the second STA and a fourth beam carrying the third frame in the direction of the first STA.

Clause 59. The method of any one of clauses 46-58, wherein the first coherence time is longer than the time offset.

Clause 60. The method of any one of clauses 46-59, wherein the transmitting of the first frame by the first AP is conditioned on the first coherence time being longer than the time offset.

Clause 61. The method of any one of clauses 46-60, wherein the first AP and second AP are members of a coordinating AP set, wherein the first AP is a master AP and the second AP is a slave AP.

A computing device may perform a method comprising multiple operations. A first access point may receive, from a second access point, a first frame comprising a parameter associated with a first coherence time of a first downlink channel between the second access point and a first station associated with the second access point. The first access point may send, based on receiving the first frame, a second frame indicating a first beamforming transmission by the second access point to the first station. A start time of the first beamforming transmission may be based on the parameter associated with the first coherence time. The second frame may further indicate a second beamforming transmission by the first access point to a second station associated with the first access point. The first access point may further send, to the second access point, a fifth frame configured to trigger the second access point to perform a sounding procedure. The fifth frame may be configured to solicit a buffer status report. The first access point may receive, from the second access point, the first frame based on the fifth frame. The first frame may further comprise an indication of a time offset. The time offset may comprise a time difference between a measurement of the sounding procedure and the first beamforming transmission. A computing device may comprise one or more processors and memory storing instructions that, when executed by the one or more processors, may cause the computing device to perform any one or more of the operations described herein. A system may comprise the first access point configured to perform any one or more of the operations described herein, and a second access point configured to send the first frame or to receive the fifth frame. A computer-readable medium may store instructions that, when executed, cause performance of any one or more of the operations described herein.

A computing device may perform a method comprising multiple operations. A second access point may send, to a first access point, a first frame comprising a parameter associated with a first coherence time of a first downlink channel between the second access point and a first station associated with the second access point. The second access point may receive, from the first access point and based on sending the first frame, a second frame indicating a first beamforming transmission by the second access point to the first station. A start time of the first beamforming transmission may be based on the parameter associated with the first coherence time. The second frame may further indicate a second beamforming transmission by the first access point to a second station associated with the first access point. The first beamforming transmission may comprise a first beam carrying a third frame in a direction of the first station and a null beam in a direction of the second station. The second beamforming transmission may comprise a second beam carrying a fourth frame in a direction of the second station and a null beam in a direction of the first station. The first beamforming transmission may comprise a first beam carrying a third frame in a direction of the first station and a second beam carrying a fourth frame in a direction of the second station. The second beamforming transmission may comprise a third beam carrying the fourth frame in a direction of the second station and a fourth beam carrying the third frame in a direction of the first station. The second access point may receive, from the first access point, a fifth frame configured to trigger the second access point to perform a sounding procedure. The fifth frame may be configured to solicit a buffer status report. The second access point may send, to the first access point, the first frame based on the fifth frame. The first frame may further comprise an indication of a time offset. The time offset may comprise a time difference between a measurement of the sounding procedure and the first beamforming transmission. The first coherence time may be longer than the time offset. A computing device may comprise one or more processors and memory storing instructions that, when executed by the one or more processors, may cause the computing device to perform any one or more of the operations described herein. A system may comprise the second access point configured to perform any one or more of the operations described herein, and a first access point configured to receive the first frame or to send the fifth frame. A computer-readable medium may store instructions that, when executed, cause performance of any one or more of the operations described herein.

A computing device may perform a method comprising multiple operations. A first station may receive, from a first access point, a first frame indicating a first beamforming transmission by a second access point to the first station. The first station may receive, from the first access point, a second beamforming transmission by the first access point to a second station associated with the first access point. The first beamforming transmission may be based on the first access point receiving a parameter associated with a first coherence time of a first downlink channel between the second access point and the first station associated with the second access point. The first beamforming transmission may comprise a first beam carrying the first frame in a direction of the first station and a null beam in a direction of the second station. The second beamforming transmission may comprise a second beam carrying a second frame in a direction of the second station and a null beam in a direction of the first station. The first beamforming transmission may comprise a first beam carrying the first frame in a direction of the first station and a second beam carrying a second frame in a direction of the second station. The second beamforming transmission comprises a third beam carrying the second frame in a direction of the second station and a fourth beam carrying the first frame in a direction of the first station. A start time of the first beamforming transmission may be based on the parameter associated with the first coherence time. The first coherence time may be longer than a second coherence time of a second downlink channel between the first access point and the second station associated with the first access point. A computing device may comprise one or more processors and memory storing instructions that, when executed by the one or more processors, may cause the computing device to perform any one or more of the operations described herein. A system may comprise the first station configured to perform any one or more of the operations described herein, and a first access point configured to send the first frame. A computer-readable medium may store instructions that, when executed, cause performance of any one or more of the operations described herein.

A computing device may perform a method comprising multiple operations. A first access point may receive, from a second access point, a first frame comprising a parameter associated with a coherence time of a downlink channel between the second access point and a station associated with the second access point. The first access point may transmit a second frame announcing a coordinated beamforming (CBF) transmission by the first access point and the second access point. A start time of the CBF transmission based be based on the parameter associated with the coherence time of the downlink channel. A computing device may comprise one or more processors and memory storing instructions that, when executed by the one or more processors, may cause the computing device to perform any one or more of the operations described herein. A system may comprise the first access point configured to perform any one or more of the operations described herein, and a second access point configured to send the first frame. A computer-readable medium may store instructions that, when executed, cause performance of any one or more of the operations described herein.

A computing device may perform a method comprising multiple operations. A first access point may receive, from a second access point, a first frame comprising a parameter associated with a first coherence time of a first downlink channel between the second access point and a first station associated with the second access point. The first access point may transmit, after receiving the first frame, a second frame indicating a first beamforming transmission by the second access point to the first station. A start time of the first beamforming transmission may be based on the parameter associated with the first coherence time. The second frame may further indicate a second beamforming transmission by the first access point to a second station associated with the first access point. The first access point may further transmit, to the second access point, a third frame that triggers the second access point to perform a sounding procedure. The first access point may further transmit a fourth frame comprising a time offset. The time offset may comprise a time difference between a measurement of the sounding procedure and the first beamforming transmission. The sounding procedure may be a joint sounding procedure comprising the first access point and the second access point. The first access point may further transmit, to the second access point, a third frame soliciting a buffer status report (BSR). The first access point may receive the first frame in response to the third frame. The first frame may further comprise an indication of a time offset. The time offset may comprise a maximum allowable time difference between a measurement of a sounding procedure and the first beamforming transmission. The first beamforming transmission may comprise a first beam carrying a third frame in the direction of the first station and a null beam in the direction of the second station. The second beamforming transmission may comprise a second beam carrying a fourth frame in the direction of the second station and a null beam in the direction of the first station. The first beamforming transmission may comprise a first beam carrying a third frame in the direction of the first station and a second beam carrying a fourth frame in the direction of the second station. The second beamforming transmission may comprise a third beam carrying the fourth frame in the direction of the second station and a fourth beam carrying the third frame in the direction of the first station. The first coherence time may be longer than a second coherence time of a second downlink channel between the first access point and the second station associated with the first access point. A start time of the first beamforming transmission may be based on the second coherence time. The first access point and second access point may be members of a coordinating access point set. The first access point may be a master access point and the second access point may be a slave access point. A computing device may comprise one or more processors and memory storing instructions that, when executed by the one or more processors, may cause the computing device to perform any one or more of the operations described herein. A system may comprise the first access point configured to perform any one or more of the operations described herein, and a second access point configured to send the first frame. A computer-readable medium may store instructions that, when executed, cause performance of any one or more of the operations described herein.

A computing device may perform a method comprising multiple operations. A first access point may transmit, to a second access point, a first frame comprising a parameter associated with a coherence time of a downlink channel between the first access point and a station associated with the first access point. The first access point may receive, from the second access point, a second frame announcing a coordinated beamforming (CBF) transmission by the first access point and the second access point. A start time of the CBF transmission may be based on the parameter associated with the coherence time of the downlink channel. A computing device may comprise one or more processors and memory storing instructions that, when executed by the one or more processors, may cause the computing device to perform any one or more of the operations described herein. A system may comprise the first access point configured to perform any one or more of the operations described herein, and a second access point configured to receive the first frame. A computer-readable medium may store instructions that, when executed, cause performance of any one or more of the operations described herein.

A computing device may perform a method comprising multiple operations. A first access point may transmit, to a second access point, a first frame comprising a parameter associated with a first coherence time of a first downlink channel between the first access point and a first station associated with the first access point. The first access point may receive, from the second access point and after transmitting the first frame, a second frame indicating a first beamforming transmission by the first access point to the first station. A start time of the first beamforming transmission may be based on the parameter associated with the first coherence time. The second frame may further indicate a second beamforming transmission by the second access point to a second station associated with the second access point. The first access point may further receive, from the second access point, a third frame that triggers the first access point to perform a sounding procedure. The first access point may further receive, from the second access point, a fourth frame comprising a time offset. The time offset may comprise a time difference between a measurement of the sounding procedure and the first beamforming transmission. The sounding procedure may be a joint sounding procedure comprising the first access point and the second access point. The first access point may further receive, from the second access point, a third frame soliciting a buffer status report (BSR). The first access point may transmit the first frame in response to the third frame. The first frame further comprises an indication of a time offset. The time offset may comprise a maximum allowable time difference between a measurement of a sounding procedure and the first beamforming transmission. The first beamforming transmission may comprise a first beam carrying a third frame in the direction of the first station and a null beam in the direction of the second station. The second beamforming transmission may comprise a second beam carrying a fourth frame in the direction of the second station and a null beam in the direction of the first station. The first beamforming transmission may comprise a first beam carrying a third frame in the direction of the first station and a second beam carrying a fourth frame in the direction of the second station. The second beamforming transmission may comprise a third beam carrying the fourth frame in the direction of the second station and a fourth beam carrying the third frame in the direction of the first station. The first coherence time may be longer than the time offset. The transmitting of the first frame by the first access point may be conditioned on the first coherence time being longer than the time offset. The first access point and second access point may be members of a coordinating access point set. The first access point may be a master access point and the second access point may be a slave access point. A computing device may comprise one or more processors and memory storing instructions that, when executed by the one or more processors, may cause the computing device to perform any one or more of the operations described herein. A system may comprise the first access point configured to perform any one or more of the operations described herein, and a second access point configured to receive the first frame. A computer-readable medium may store instructions that, when executed, cause performance of any one or more of the operations described herein.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 6G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, Wi-Fi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by a first access point from a second access point, a first frame comprising a parameter associated with a first coherence time of a first downlink channel between the second access point and a first station associated with the second access point; and
sending, by the first access point and based on receiving the first frame, a second frame indicating a first beamforming transmission by the second access point to the first station.

2. The method of claim 1, wherein a start time of the first beamforming transmission is based on the parameter associated with the first coherence time.

3. The method of claim 1 or claim 2, wherein the second frame further indicates a second beamforming transmission by the first access point to a second station associated with the first access point.

4. The method of any one of claims 1 to 3, wherein the first beamforming transmission comprises a first beam carrying a third frame in a direction of the first station and a null beam in a direction of the second station, and wherein the second beamforming transmission comprises a second beam carrying a fourth frame in a direction of the second station and a null beam in a direction of the first station.

5. The method of any one of claims 1 to 4, wherein the first beamforming transmission comprises a first beam carrying a third frame in a direction of the first station and a second beam carrying a fourth frame in a direction of the second station, and wherein the second beamforming transmission comprises a third beam carrying the fourth frame in a direction of the second station and a fourth beam carrying the third frame in a direction of the first station.

6. The method of any one of claims 1 to 5, wherein the first coherence time is longer than a second coherence time of a second downlink channel between the first access point and the second station associated with the first access point.

7. The method of any one of claims 1 to 6, further comprising:
sending, by the first access point to the second access point, a fifth frame configured to trigger the second access point to perform a sounding procedure, wherein the fifth frame is configured to solicit a buffer status report, and wherein the receiving, by the first access point from the second access point, the first frame comprises receiving the first frame based on the fifth frame; and
wherein the first frame further comprises an indication of a time offset, and wherein the time offset comprises a time difference between a measurement of the sounding procedure and the first beamforming transmission.

8. A method comprising:
receiving, by a first station from a first access point, a first frame indicating a first beamforming transmission by a second access point to the first station; and
receiving, by the first station from the first access point, a second beamforming transmission by the first access point to a second station associated with the first access point.

9. The method of claim 8, wherein the first beamforming transmission is based on the first access point receiving a parameter associated with a first coherence time of a first downlink channel between the second access point and the first station associated with the second access point.

10. The method of claim 8 or claim 9, wherein the first beamforming transmission comprises a first beam carrying the first frame in a direction of the first station and a null beam in a direction of the second station, and wherein the second beamforming transmission comprises a second beam carrying a second frame in a direction of the second station and a null beam in a direction of the first station.

11. The method of any one of claims 8-10, wherein the first beamforming transmission comprises a first beam carrying the first frame in a direction of the first station and a second beam carrying a second frame in a direction of the second station, and wherein the second beamforming transmission comprises a third beam carrying the second frame in a direction of the second station and a fourth beam carrying the first frame in a direction of the first station.

12. The method of any one of claims 8 to 11, wherein a start time of the first beamforming transmission is based on the parameter associated with the first coherence time.

13. A computing device comprising:
one or more processors; and
memory storing instructions that, when executed by the one or more processors, cause the computing device to perform: the method of any one of claims 1 to 7; or the method of any one of claims 8-12.

14. A system comprising:
an access point configured to perform the method of any one of claims 1 to 7; and
a station configured to perform the method of any one of claims 8-12.

15. A computer-readable medium storing instructions that, when executed, cause performance of: the method of any one of claims 1 to 7; or the method of any one of claims 8-12.
